# FASCICULE DE BREVET EUROPEEN

(11) **EP 4 642 640 B1**
(45) Date de publication et mention de la délivrance du brevet: **04.11.2026**
(21) Numéro de dépôt: 23840977.5
(22) Date de dépôt: 26.12.2023
(51) Int. Cl.: B32B 7/023, B32B 17/10

(54) **TOIT VITRÉ ILLUMINABLE DE VÉHICULE**
BELEUCHTBARES SONNENDACH FÜR EIN FAHRZEUG
ILLUMINABLE VEHICLE SUNROOF

(30) Priorité: 28.12.2022 FR 2214599
(43) Date de publication de la demande: 05.11.2025
(73) Titulaire: Saint-Gobain Sekurit France, 60150 Thourotte (FR)
(72) Inventeur: LAUDEREAU, Jean-Baptiste, 93300 AUBERVILLIERS (FR); BERARD, Mathieu, 93300 AUBERVILLIERS (FR); MIMOUN, Emmanuel, 93300 AUBERVILLIERS (FR); ALTMEYER, Stefan, 41539 DORMAGEN (DE)
(74) Mandataire: Saint-Gobain Recherche
(86) Numéro de dépôt international: PCT/EP2023/087805
(87) Numéro de publication internationale: WO 2024/141529

(56) Documents cités:
- EP-A1- 3 693 771
- US-A1- 2022 136 893

## Description

La présente invention concerne les toits automobiles illuminables.

Il est connu d'intégrer des diodes électroluminescentes inorganiques, également appelées DEL ou LED pour « Light-Emitting Diode » en anglais, au niveau du bord de vitrages simples ou feuilletés, de manière à ce que la lumière émise par les diodes entre par la tranche d'une feuille de verre et soit guidée par cette dernière jusqu'à un élément diffusant, également appelé moyen d'extraction de la lumière.

En particulier, il existe des vitrages éclairants, cités par exemple dans la demande de brevet FR3034501A1 dont l'élément diffusant (ou moyen d'extraction) est une couche diffusante comprend des particules diélectriques diffusantes dans une matrice.

US 2022/136893 A1 divulgue une vitre composite, notamment pour un panneau de toit de véhicule automobile, comprenant une vitre extérieure et une vitre intérieure qui sont reliées l'une à l'autre par l'intermédiaire d'au moins une couche intermédiaire thermoplastique, et au moins un capteur de lumière avec au moins une surface sensible à la lumière qui est disposée entre les vitres extérieure et intérieure, dans lequel la surface sensible à la lumière fait face à la vitre extérieure et un élément optique holographique est disposé entre la surface sensible à la lumière et la vitre extérieure, et l'élément optique holographique est réalisé sous la forme d'un hologramme pour une diffraction de la lumière incidente en fonction de l'angle d'incidence.

**Il** existe un besoin de réaliser un vitrage éclairant duquel la lumière est extraite avec une bonne efficacité d'extraction et discrète à l'état off.

A cet effet, un aspect de l'invention concerne un toit vitré feuilleté de véhicule comprenant :
- une première feuille de verre minéral, dite externe, transparente, ayant une première face principale dite face F1 et une deuxième face principale dite face F2 opposée, d'indice de réfraction nv à une première longueur d'onde λ1 dans le visible de préférence supérieur ou égal à 1,5
- une deuxième feuille de verre, interne, en verre organique ou minéral, transparente, d'indice de réfraction n₀ à λ1, ayant une face principale dite face F3 et une face principale opposée dite face F4,
- entre la face F2 et la face F3**,** un intercalaire de feuilletage, diélectrique, en matière polymère, comportant au moins une couche d'intercalaire de feuilletage,

le toit vitré comprenant, entre la face F2 et F3, dans cet ordre en s'éloignant de F2: de préférence une ou plusieurs couches intermédiaires supérieures diélectriques, transparentes, d'indices de réfraction donnés dans le visible, en particulier la ou les couches intermédiaires supérieures sont des couches d'intercalaire,
la première feuille étant teintée et/ou parmi la ou les couches intermédiaires supérieures une première couche étant teintée, en particulier une première couche d'intercalaire teintée,
lorsque plusieurs couches intermédiaires supérieures sont teintées, la première couche teintée est la couche teintée la plus proche de la face F3,
   - une première couche holographique, transparente, diélectrique, comprenant une première zone fonctionnelle avec un premier hologramme en volume, diffractant à λ1, la première zone fonctionnelle ayant un indice de réfraction n_{H1} à λ1
de préférence, entre la première zone fonctionnelle et la face F3, une ou plusieurs couches intermédiaires inférieures, transparente, diélectriques, notamment d'intercalaire,
n₂ étant l'indice de réfraction le plus bas à λ1 dans le visible :
   a) parmi les indices de réfraction de la ou des couches intermédiaires supérieures, notamment d'intercalaire, entre la première couche holographique exclue et jusqu'à la première couche teintée incluse
   b) ou en l'absence de couche intermédiaire supérieure teintée ou en l'absence de couche intermédiaire supérieure n₂ étant égal à nᵥ
n₁ étant l'indice de réfraction le plus bas à λ1 parmi les indices de réfraction de la ou des couches intermédiaires inférieures éventuelles, de la première zone fonctionnelle et n₀, avec n₂<n₁
le toit étant adapté pour recevoir un faisceau lumineux dans la deuxième feuille de verre, de rayons lumineux injectés à λ1 dans la deuxième feuille de verre, avec une gamme θ1 d'angles d'incidence dans la deuxième feuille de verre, étant guidés dans le toit jusqu'à atteindre le premier hologramme et avec θ1 tel que arcsin (n₂/n₀) ≤θ1 ≤arcsin ( n₁/n₀)
la fonction optique dudit premier hologramme étant choisie telle qu'une portion des rayons guidés dans le toit (dans la gamme θ1) atteint le premier hologramme et sont diffractés et extraits du toit du côté de la face F4, rayons diffractés définis par une gamme d'angles d'incidence θ2 en face F4 (dans la deuxième feuille de verre), et comprise entre -arcsin (1/n₀) et arcsin (1/n₀).

En particulier, la gamme θ1 représente les angles d'incidence par rapport au vecteur localement normal à la face inférieure de la couche au point d'impact des rayons guidés.

L'invention permet avantageusement d'extraire des ondes lumineuses dans une gamme d'angles particulière grâce à un hologramme. En particulier, l'utilisation d'un hologramme en volume est particulièrement avantageuse car ces hologrammes bénéficient d'une grande efficacité de diffraction, ce qui signifie une grande luminance. En outre, les hologrammes possèdent une sélectivité en longueur d'onde et angulaire qui croît avec leur épaisseur, ce qui signifie qu'ils peuvent être très transparents. Ces deux propriétés font des hologrammes des éléments particulièrement intéressants pour l'éclairage du toit ouvrant, car la plupart des solutions de l'état de la technique reposent sur la diffusion de la lumière souffrent d'un compromis entre une vision floue à travers le vitrage et l'efficacité d'extraction des rayons lumineux. On définit l'efficacité d'extraction comme l'ensemble de la lumière qui est diffractée par l'hologramme sur la surface entière de manière à sortir du verre (dans la gamme d'angle indiquée) rapporté à la lumière injectée dans le guide.

En outre, on définit une efficacité intrinsèque de l'hologramme, c'est-à-dire la fraction de lumière incidente sur l'hologramme qui est redirigée par celui-ci, peut être choisie d'au moins une valeur seuil en fonction de la taille du système (hologramme et guide). Plus la taille du système est grande plus la valeur seuil est abaissée, pour garantir un éclairage homogène. Par exemple, une efficacité intrinsèque de 30% convient bien pour une longueur d'interaction avec l'hologramme, typiquement la longueur de l'hologramme, d'un mètre.

En particulier, l'hologramme feuilleté est conçu de manière à diffracter la lumière guidée hors du toit. Par exemple, une ou des sources de lumière (diodes etc), notamment placées sur le bord de la deuxième feuille de verre (pour une injection directe) ou encore côte face F4 et couplé à un élément de redirection de lumière coté face F3 ou F4 de façon à ce que la lumière se propage dans la deuxième feuille de lumière, peuvent avantageusement lire l'hologramme afin de fournir un toit ouvrant (ou non) lumineux, potentiellement avec un design graphique pour des applications décoratives. De cette façon, il est possible d'obtenir un compromis intéressant entre transparence et efficacité d'extraction.

L'invention tire parti de l'épaisseur de matière teintée (première feuille teintée ou première couche teintée éventuelle). En effet, si les rayons les plus rasants sont guidés dans la deuxième feuille par réflexion totale interne avec l'interface avec la couche intermédiaire (couche intermédiaire inférieure d'intercalaire par exemple), d'autres rayons moins rasant se propageant dans le vitrage par réfraction, atteignent la matière teintée et sont rapidement absorbés après quelques rebonds suite à leur réfraction et leur réflexion.

L'épaisseur teintée crée ainsi un filtrage angulaire qui permet de ne pas devoir gérer les angles moins rasants. Ainsi, la matière teintée a deux avantages. Le premier avantage est qu'elle impose des angles guidés importants. En enregistrant l'hologramme pour qu'il fonctionne dans cette gamme angulaire, les angles qui viennent de dehors sont très fortement éloignés de la condition de Bragg, donc pas optimaux pour la diffraction. Le deuxième avantage est, qu'en atténuant la lumière qui vient de l'extérieur, on a nécessairement moins de lumière parasite susceptible d'interagir avec l'hologramme. Ainsi, les deux avantages permettent d'obtenir premièrement une plus forte brillance avec moins de flou qu'un diffuseur et deuxièmement moins de défauts optiques que juste un hologramme entre deux verres.

En particulier, la première feuille de verre et/ou toute couche intermédiaire teintée (d'intercalaire PVB, EVA ou film polyester, dont PET etc) sont suffisamment absorbants, compte tenu de leurs coefficients d'absorption et de leurs épaisseurs, pour que sur un rebond, c'est-à-dire leur réfraction de la face F3 à la face F1, puis leur réflexion sur face F1, et enfin leur réfraction jusqu'à la face F3, l'intensité lumineuse soit diminuée d'au moins 50%.

On peut mesurer l'intensité lumineuse par spectroscopie en transmission. Typiquement le coefficient d'extinction k, partie imaginaire de l'indice de réfraction complexe pour un verre dénommé VG10 de la demanderesse de 2mm (ou pour un PVB teinté de 0,76mm avec TL de 40% est de l'ordre 10⁻⁸ dans le visible (en particulier à la longueur d'onde de référence et même sur la gamme spectrale de la source).

On préfère que la première couche teintée éventuelle ou la première feuille de verre teintée soit surteintée, donc suffisamment absorbante. On préfère que la première couche teintée soit passive plutôt qu'une couche à teinte variable d'un dispositif électrocommandable. On peut toutefois rajouter des fonctionnalités comme une couche à teinte variable ou à flou variable de préférence entre la face F2 et une couche teintée (la première couche teintée de préférence).

Une couche intermédiaire teintée (d'intercalaire, couche intermédiaire supérieure et/ou inférieure) selon l'invention peut avoir une transmission lumineuse d'au plus 50%, ou d'au plus 40%, ou d'au plus 30%, ou d'au plus 20%.

Pour la première couche teintée, on peut choisir une couleur de teinte différente ou identique à celle de la première feuille de verre si également teintée. Par exemple la première feuille de verre teinté est verte, bleue ou grise et la première couche teintée, de préférence d'intercalaire, par exemple en matériau PVB, est bleue ou grise. On peut ajouter au moins une autre couche intermédiaire, de préférence d'intercalaire, clair, par exemple PVB clair, plus proche de la face F2 que la première couche teintée ou plus proche de la face F3.

Au moins une couche intermédiaire inférieure peut être une couche adhésive (inférieure) (distincte et) en contact avec la première couche holographique et même avec la face F3 et/ou une couche intermédiaire supérieure être une couche adhésive (supérieure) en contact avec la première couche holographique et même avec la face F2, couche adhésive (supérieure et/ou inférieure) locale (d'étendant peu ou pas au-delà de la première couche holographique, par exemple moins de 1cm au delà) ou dite étendue en s'étendant sur au moins 80%, voire au moins 90%, 95% de la face principale du toit pour former couche d'intercalaire de feuilletage (supérieure et/ou inférieure). On peut avoir des couches adhésives inférieure et supérieure locales ou une couche adhésive inférieure locale et une couche adhésive supérieure étendue ou encore une couche adhésive inférieure étendue et une couche adhésive supérieure locale, ou des couches adhésives inférieure et supérieure étendues.

La première couche holographique peut être un revêtement de préférence sur la face F3 voire sur la face F2, ou un film (autoportant). La première couche holographique peut être :
- en contact avec une couche adhésive supérieure (étendue ou locale) qui est par exemple un film à bas indice de réfraction, rapportée ou collée à la face F2
- et/ou en contact avec une couche intermédiaire inférieure (étendue, en particulier couche à base de PVB, ou locale) rapportée ou collée à la face F3.

Outre les caractéristiques qui viennent d'être évoquées dans le paragraphe précédent, le toit vitré selon un aspect de l'invention peut présenter une ou plusieurs caractéristiques complémentaires parmi les suivantes, considérées individuellement ou selon toutes les combinaisons techniquement possibles :
- le premier hologramme est en réflexion,
- n₀ est compris entre 1,5 et 1,62 à λ1,
- n₂ est inférieur ou égal à 1,48 à λ1 voire à 1,45 et vaut de préférence au moins 1,3
- nᵥ est compris entre 1,5 et 1,55 à λ1,
- n₂ est inférieur ou égal à 1,45 avec nᵥ supérieur à n₂ (et de préférence avec une couche intermédiaire supérieure qui est une couche adhésive, notamment locale ou étendue en particulier couche en matière réticulée),
- n₁ est supérieur ou égal à 1,48 et notamment n₁ supérieur à n₀ et de préférence une couche intermédiaire inférieure est une couche adhésive (locale ou étendue, en particulier couche à base de PVB),
- n₁ est inférieur ou égal à n_{H1} et même n₁- n_{H1} vaut au plus 0,2 ou 0,1, (pour que le premier hologramme reçoive le plus de lumière possible),
- le premier hologramme est un réseau de diffraction de préférence sinusoïdal,
- le premier hologramme est un ensemble de zones de Fresnel hors axe, notamment obtenu à partir d'un réseau de microlentilles, et en particulier obtenu à partir de l'enregistrement du champ transmis par une matrice de micro-lentilles.

Le toit vitré peut comprendre une source de lumière (notamment des diodes) couplée optiquement à la deuxième feuille (par la tranche via une paroi interne délimitant un trou dans la deuxième feuille, ou côté face F4 et associé à un élément de redirection de lumière notamment prismatique côté face F4 ou côté face F3, en particulier source de lumière monochromatique à ladite première longueur d'onde λ1 et une largeur de bande à mi-hauteur de préférence d'au plus 30nm, λ1 est de préférence choisie dans une première gamme LB1 allant de 450 nm jusqu'à 510 nm exclu ou dans une deuxième gamme LB2 allant de 510 nm jusqu'à 560 nm exclu, ou dans une troisième gamme LB3 allant de 560 à 650 nm, ou mieux de 620nm à 650nm (en particulier λ1 = 532 nm±30nm, qui correspond au vert, λ2 =480nm±30nm, qui correspond au bleu, voire λ3 = 680nm±30nm, qui correspond au rouge).

Une couche intermédiaire supérieure peut être une couche d'intercalaire d'indice nᵢ égale à 1,48 dans le visible, et λ1 est dans la première gamme LB2 ou LB1, de préférence LB2.

Le toit vitré peut comprendre une source de lumière polychromatique (comportant une ou plusieurs sources de lumière, notamment des diodes), couplée optiquement à la deuxième feuille, la source de lumière polychromatique émettant :
- à ladite première longueur d'onde λ1 choisie parmi dans une première plage qui est dans une première gamme LB1 allant de 450 nm jusqu'à 510 nm exclu ou dans une deuxième gamme LB2 allant de 510 nm jusqu'à 560 nm exclu, ou dans une troisième gamme LB3 allant de 560nm jusqu'à 650 nm, ou mieux de 620nm à 650nm, (la source de lumière de lumière ayant notamment une première source avec une largeur de bande à mi-hauteur de préférence de 30nm centrée sur λ1)
- à une deuxième longueur d'onde λ2 principale distincte de λ1 et choisie dans une deuxième plage distincte de la première plage et qui est dans les première, deuxième ou troisième gammes LB1, LB2, LB3 , (la source de lumière ayant notamment une deuxième source de lumière avec une largeur de bande à mi-hauteur de préférence de 30nm centrée sur λ2) et de préférence à une troisième longueur d'onde λ3 principale distincte de λ1 et λ2 et choisie dans une troisième plage distincte de la première plage et de la deuxième plage qui est dans les première, deuxième ou troisième gammes LB1, LB2, LB3, (la source de lumière ayant notamment une troisième source de lumière ayant une largeur de bande à mi-hauteur de préférence de 30nm centrée sur λ3), de préférence la première plage est dans LB2, la deuxième plage est dans LB1, la troisième plage est dans LB3.

Le premier hologramme dit multibandes (par exemple multiplexé) diffracte également à la deuxième longueur d'onde λ2, la première zone fonctionnelle ayant un indice de réfraction n_{H2} à λ2 voire diffracte également à la troisième longueur d'onde λ3, la première zone fonctionnelle ayant un indice de réfraction n_{H3} à λ3 ou le toit comprend un deuxième hologramme diffractant à λ2 entre le premier hologramme et la face F3, avec une deuxième couche holographique ayant une deuxième zone fonctionnelle ayant un indice de réfraction n_{H2} à λ2 et éventuellement le toit comprend un troisième hologramme diffractant à λ3, entre le deuxième hologramme et la face F3, avec une troisième couche holographique avec une troisième zone fonctionnelle ayant un indice de réfraction n_{H3} à λ3,
n₂ₐ étant l'indice de réfraction le plus bas à λ2 dans le visible :
   a) en cas de deuxième zone fonctionnelle, parmi les indices de réfraction à λ2 de la ou des couches intermédiaires inférieures au-dessus (en allant vers la face F2) de la deuxième zone fonctionnelle, de la première zone fonctionnelle, de la ou des couches intermédiaires supérieures et jusqu'à la première couche teintée incluse,
   b) ou en cas de premier hologramme multibande, parmi les indices de réfraction de la ou des couches intermédiaires supérieures (notamment d'intercalaire) entre la première couche holographique exclue et jusqu'à la première couche teintée incluse
   c) ou en l'absence de couche intermédiaire supérieure teintée ou de couche intermédiaire supérieure, n₂ₐ étant égal à nᵥₐ avec nᵥₐ l'indice de réfraction à λ2 dans le visible de la première feuille
      et
   i) n₁ₐ étant l'indice de réfraction le plus bas à λ2 parmi les indices de réfraction de la ou des couches intermédiaires inférieures éventuelles sous la deuxième zone fonctionnelle (vers la face F3), l'indice n_{H2} de la deuxième zone fonctionnelle, et n₀ₐ qui est l'indice de réfraction à λ2 dans le visible de la deuxième feuille
   j) ou en cas de premier hologramme multibandes n₁ₐ étant l'indice de réfraction le plus bas à λ2 parmi les indices de réfraction de la ou des couches intermédiaires inférieures éventuelles (sous la première zone fonctionnelle), l'indice n_{H2} de la première zone fonctionnelle, et n₀ₐ qui est l'indice de réfraction à λ2 dans le visible de la deuxième feuille
la fonction optique dudit deuxième hologramme ou du premier hologramme multibandes étant choisie telle qu'une portion de rayons lumineux injectés à λ2 dans la deuxième feuille de verre, guidés dans le toit, (dans la gamme θ1), atteint le deuxième hologramme ou le premier hologramme multibandes et est diffractée et extraite du toit du côté de la face F4 dans toute ou partie de la gamme d'angles d'incidence θ2 en face F4 (dans la deuxième feuille de verre), et comprise entre -arcsin (1/n₀ₐ) et arcsin (1/n₀ₐ),
et éventuellement, n_{2b} étant l'indice de réfraction le plus bas à λ3 dans le visible:
   a') en cas de troisième zone fonctionnelle, parmi les indices de réfraction à λ3 de la ou des couches intermédiaires inférieures au-dessus (en allant vers la face F2) de la troisième zone fonctionnelle (en incluant la deuxième zone fonctionnelle), de la première zone fonctionnelle, de la ou des couches intermédiaires supérieures et jusqu'à la première couche teintée incluse,
   b') ou en cas de premier hologramme multibandes, parmi les indices de réfraction de la ou des couches intermédiaires supérieures (notamment d'intercalaire,) entre la première couche holographique exclue et jusqu'à la première couche teintée incluse c') ou en l'absence de couche intermédiaire supérieure teintée ou de couche intermédiaire supérieure, n_{2b} étant égal à n_{vb} avec n_{vb} l'indice de réfraction à λ3 dans le visible de la première feuille
   et
n_{1b} étant l'indice de réfraction le plus bas à λ3 parmi les indices de réfraction de la ou des couches intermédiaires inférieures éventuelles sous la troisième zone fonctionnelle (vers la face F3), l'indice n_{H3} de la troisième zone fonctionnelle, et n_{0b} qui est l'indice de réfraction à λ3 dans le visible de la deuxième feuille
la fonction optique dudit troisième hologramme ou du premier hologramme multibandes étant choisie telle qu'une portion de rayons lumineux injectés à λ3 dans la deuxième feuille de verre, guidés dans le toit, (dans la gamme θ1), atteint le troisième hologramme ou le premier hologramme multibandes et est diffractée et extraite du toit du côté de la face F4 dans toute ou partie de la gamme d'angles d'incidence θ2 en face F4 (dans la deuxième feuille de verre), et comprise entre -arcsin (1/n_{0b}) et arcsin (1/n_{0b})
pour une direction d'observation donnée dans la gamme θ2 :
   - le premier hologramme diffractant à λ1 ayant une efficacité de diffraction maximale dans une première sous gamme de θ1 a de largeur d'au moins 1°
   - le deuxième hologramme ou le premier hologramme multibandes diffractant à λ2 ayant une efficacité de diffraction maximale dans une deuxième sous gamme de θ1b de largeur d'au moins 1° avec recouvrement partiel ou disjoint de θ1a
   - le troisième hologramme éventuel ou le premier hologramme multibandes, diffractant à λ3, ayant une efficacité de diffraction maximale dans une troisième sous gamme de θ1c de largeur d'au moins 1° avec recouvrement partiel ou disjoint avec première et deuxième sous gammes θ1 a et θ2a (l'ensemble de θ1a, θ1b, θ1c est de préférence au moins 60%, 80% de θ1).
n_{H1} et n_{H2} ne sont pas forcément distincts, le milieu pouvant être dispersif ou non. Par exemple, il est possible d'avoir deux ou trois modulations d'indice autour d'un seul indice n_{H}. n_{H3} est en particulier distinct de n_{H1} et n_{H2}.

Le premier hologramme multibandes est par exemple un hologramme multiplexé, combinaison linéaire des fonctions optiques (ici en particulier deux fonctions optiques ou trois fonctions optiques).

Alternativement, le toit comporte un empilement d'un premier et d'un deuxième hologramme, notamment une couche intermédiaire inférieure formant la deuxième couche holographique comportant ladite deuxième zone fonctionnelle en contact optique via adhésif local ou intercalaire de feuilletage, avec la première zone fonctionnelle.

Il existe un empilement du premier, deuxième et troisième hologrammes et en particulier avec une deuxième zone fonctionnelle, une couche intermédiaire inférieure formant la deuxième couche holographique comportant ladite deuxième zone fonctionnelle en contact optique via adhésif local ou intercalaire, avec la première zone fonctionnelle, et avec une troisième zone fonctionnelle distincte, une autre couche intermédiaire inférieure formant la troisième couche holographique comportant ladite troisième zone fonctionnelle en contact optique, via adhésif local ou intercalaire de feuilletage, avec la deuxième zone fonctionnelle. Dans une réalisation, le deuxième hologramme peut être multibandes avec deux fonctions optiques pour λ2 et λ3.

Le toit vitré peut comprendre:
- une première couche intermédiaire supérieure, d'intercalaire, en matériau adhésif réticulé, d'indice de réfraction égal à n₂ de préférence d'au plus 1,45 à λ1
- une première couche intermédiaire inférieure, d'intercalaire, d'indice de réfraction d'au moins 1,48 à λ1, notamment en matériau thermoplastique, en particulier PVB, ou EVA (thermoplastique ou réticulé)
- une deuxième feuille de verre minéral.

La couche holographique est un photopolymère, la première zone fonctionnelle a une modulation d'indice dn autour d'un indice de réfraction n_{H0} à une longueur d'onde d'inscription dans le visible λ0 qui est préférentiellement dans la bande spectrale d'une source de lumière monochromatique ou polychromatique couplée optiquement à la deuxième feuille. Avantageusement, cette caractéristique préférentielle évite de faire de la pré compensation qui obligerait à un changement d'angle de référence en anticipant la différence de longueurs d'onde. En particulier, la couche holographique comprend un hologramme multibandes diffractant à λ1, λ2, λ3 ou le toit comprend des deuxième et troisième hologrammes diffractant respectivement à λ2, λ3 et λ0 est dans une bande spectrale (en particulier LB2) incluant la valeur du milieu parmi λ1, λ2, λ3,et même le deuxième et troisième hologramme ont des longueurs d'onde d'inscription distinctes dans le visible λ'0 et λ"0, distinctes de λ0 dans une bande spectrale incluant une valeur distincte du milieu parmi λ1, λ2, λ3 (en particulier LB1 et LB3). En particulier, la modulation d'indice est petite autour de n_{H1}, n_{H1} étant dépendant de la longueur d'onde à laquelle le matériau est exposé.

Le nombre de couches intermédiaires supérieures est noté N. N vaut par exemple au plus 4 ou 3 ou 2 ou 1 de préférence au moins 1 voire 0 si la première couche holographique est apte à lier les feuilles (adhésion suffisante avec les feuilles). Les couches intermédiaires supérieures peuvent avoir diverses fonctionnalités possibles couche adhésive, notamment d'intercalaire de feuilletage, teintée, support de couche fonctionnelle (électroconductrice, chauffante, basse émissivité, athermique etc.). Chaque couche intermédiaire supérieure peut avoir une épaisseur submillimétrique et est par exemple un film d'au moins 30µm ou 50µm d'épaisseur.

Une couche intermédiaire supérieure ou inférieure peut comprendre une feuille polymère thermoplastique notamment adhésives aux feuilles de verre. Les polymères sont choisis parmi le butyral de polyvinyl (PVB), les polyuréthanes (PU), les polyurées, l'éthylène acétate de vinyle (EVA), les polyoléfine (dont polyéthylène (PE), polypropylène (PP) ou polyisobutylène (P-IB)), le polychlorure de vinyle et ses dérivés (par exemple poly(dichlorure de vinyle) (PVDC)), les polymères styréniques (par exemple polystyrène (PS), acrylostyrène butadiène (ABS), styrène acrylonitrile (SAN)), les polyacryliques (dont polyacrylonitrile (PAN) et le poly(méthacrylate de méthyle) (PMMA) ), les polyester (dont poly(téréphtalate d'éthylène) (PET) et poly(téréphtalate de butylène) (PBT)), le polyoxyméthylène (POM), les polyamides (PA), les polymères fluorés tel que polychlorotrifluoroéthylène (PCTFE), les polycarbonates (PC), les polysulfones aromatiques dont polysulfone (PSU), les polyphénylène éther (PPE), les époxy (EP) seuls ou en mélange et/ou copolymère de plusieurs d'entre eux.

Une couche d'intercalaire de feuilletage, couche intermédiaire inférieure ou supérieure, peut être une feuille ou feuillet à base de PVB ou PU (souple) ou thermoplastique sans plastifiant (copolymère éthylène/acétate de vinyle (EVA), etc.), chaque feuille ayant par exemple une épaisseur entre 0,2 mm et 1,1mm, notamment 0,38 et 0,76mm. De préférence, toute couche d'intercalaire, en feuillet, à base de PVB comprend de 70% à 75% de PVB, 25 à 30% de plastifiant et moins de 1% d'adjuvants. Il existe aussi des feuillets PVB avec peu ou sans plastifiant comme le film « MOWITAL LP BF » de la société KURARAY. Aussi l'intercalaire de feuilletage peut être ou comprendre une feuille à base (en) poly(vinyl butyral) (PVB) contenant moins de 15% en poids de plastifiants, de préférence moins de 10% en poids et encore mieux moins de 5% en poids et en particulier sans plastifiant et notamment d'épaisseur d'au plus 0,15mm en particulier de 25 à 100µm, 40 à 70µm et même de 50µm, par exemple le produit Kuraray Mowital^{®}.

L'intercalaire de feuilletage peut être acoustique en particulier comprendre ou être constitué d'un PVB acoustique (tricouche, quadricouche...). Ainsi, l'intercalaire de feuilletage peut comprendre au moins une couche dite de milieu en matériau plastique viscoélastique aux propriétés d'amortissement vibro-acoustique notamment à base de polyvinylbutyral et de plastifiant, et l'intercalaire, et comprenant en outre deux couches externes en PVB standard, la couche de milieu étant entre les deux couches externes. On peut citer les PVB acoustiques décrits dans les demandes de brevet WO2012/025685, WO2013/175101, notamment teinté comme dans le WO2015079159.

Les couches intermédiaires supérieures ont diverses fonctionnalités possibles couche adhésives, d'intercalaire de feuilletage, ou autre. Chaque couche intermédiaire supérieure à une épaisseur submillimétrique et est par exemple un film d'au moins 30µm ou 50µm d'épaisseur.

L'intercalaire de feuilletage peut être monocouche, et peut être la première couche intermédiaire supérieure ou un film teinté, de préférence. L'intercalaire de feuilletage est de préférence multicouche, et comprendre notamment deux, trois ou quatre couches adhésives, notamment des films adhésifs ou feuillets. En particulier l'intercalaire de feuilletage peut comprendre une couche intermédiaire supérieure claire (notamment pas d'ajout de colorants) teintée et une couche intermédiaire inférieure claire. L'intercalaire de feuilletage peut comprendre notamment une couche intermédiaire supérieure claire ou teintée et une couche intermédiaire inférieure claire en contact adhésif avec la couche holographique. Les couches formant l'intercalaire de feuilletage peuvent être en matière distincte, en particulier au moins une couche thermoplastique et une autre couche est un adhésif réticulé. Par exemple la couche intermédiaire inférieure est une couche thermoplastique, en PVB ou EVA (thermoplastique) par exemple, et pour une première couche intermédiaire supérieure (avec bas indice) une couche adhésive réticulé et éventuellement une deuxième couche intermédiaire supérieure thermoplastique (PVB) notamment teintée (PVB ou EVA). L'EVA peut être est une feuille thermodurcissable.

En particulier, pour l'intercalaire de feuilletage, on prévoit au moins une première couche intermédiaire supérieure intercalaire et de préférence au plus deux ou au plus trois couches supérieures d'intercalaire et une seule couche intermédiaire inférieure qui est une couche d'intercalaire.

Si la couche teintée est une couche d'intercalaire par exemple thermoplastique en PVB ou EVA, on peut préférer au plus une seule première couche intermédiaire supérieure qui est de préférence une couche d'intercalaire, en adhésif réticulé par exemple.

On préfère pour les couches d'intercalaire des films, par exemple des films autoportants.

Les interfaces entre couches d'intercalaires, les feuillets par exemple, ne sont pas forcément discernables. L'intercalaire peut incorporer des éléments, non adhésifs au verre, tels que des films polymères fonctionnels ou des éléments électro optiques, des capteurs, de diverses étendues, sur tout ou partie du vitrage. Par exemple un film polymère tel que le PET est entre deux feuillets thermoplastiques (de PVB etc).

On préfère également choisir un intercalaire de feuilletage le moins flou possible c'est-à-dire avec un flou d'au plus 1,5% et même d'au plus 1%.

La première couche holographique, notamment en film, peut être en plusieurs parties espacées ou aboutées. La première couche holographique peut occuper une portion de la surface espacée de la zone de propagation des faisceaux lumineux. Le bord le plus éloigné peut s'arrêter avant la zone d'extinction des rayons guidés (absorption lors de la propagation) typiquement de 50cm pour un verre extraclair. La largeur de la couche holographique est de préférence au moins centimétrique et par exemple d'au moins 10 cm.

De préférence, entre la première zone fonctionnelle et la face F3, le toit vitré comprend une ou plusieurs couches intermédiaires inférieures, transparentes, diélectriques. Lesdites couches intermédiaires inférieures sont notamment des couches d'intercalaire. Le nombre de couches intermédiaires inférieures est noté M. De préférence, M vaut par exemple au plus 2 ou 1, voire 0. Chaque couche intermédiaire inférieure peut avoir diverses fonctionnalités possibles mais de préférence adhésives et sont claires plutôt que teintées. Chaque couche intermédiaire inférieure a de préférence une épaisseur submillimétrique, et est par exemple un film, étant de préférence d'au moins 30µm ou 50µm d'épaisseur.

On peut avoir une ou des couches inférieures et/ou supérieures fonctionnelles barrière chimique, par exemple une ou des couches barrière de diffusion, par exemple entre la couche holographique et couche intermédiaire inférieure d'intercalaire. Dans ce cas la première couche intermédiaire supérieure peut être cette couche de protection ou être une couche intermédiaire inférieure entre la couche holographique et une autre couche intermédiaire inférieure comme le PVB

On souhaite éviter tout revêtement trop réflecteur, diffusant ou absorbant pour les couche intermédiaire supérieures et inférieures.

L'intercalaire de feuilletage monocouche ou multicouches est notamment d'épaisseur d'au plus 1,2 cm ou subcentimétrique, et est en particulier supérieure à 0,3mm, notamment tout ou partie thermoplastique (teinté ou non), avec par exemple au moins une partie inférieure de l'intercalaire (teinté ou non) dite couche intermédiaire inférieure d'intercalaire (par exemple un feuillet), d'épaisseur donnée de préférence d'au moins 100µm, en contact adhésif avec la face F3.

Le toit vitré est ainsi teinté, donc absorbant dans le visible en particulier dans la gamme spectrale de la source de lumière, sur une épaisseur donnée dont la valeur est par exemple d'au moins 100µm ou d'au moins 300µm. En particulier:
- la première feuille de verre est teintée, sur toute son épaisseur en étant colorée en masse,
- et/ou sur toute ou partie de l'intercalaire de feuilletage, de préférence l'épaisseur teintée est submillimétrique, par exemple une couche intermédiaire supérieure d'intercalaire, entre la face F2 et la couche intermédiaire inférieure d'intercalaire, est teintée, colorée en masse, et/ou la couche intermédiaire inférieure d'intercalaire est teintée,
- et/ou un film transparent teinté, coloré en masse, polymère en particulier non adhésif au verre minéral et/ou organique, par exemple d'épaisseur d'au moins 30 µm ou d'au moins 50 µm et d'au plus 200µm. Le film transparent teinté est inséré entre la face F2 et la couche intermédiaire inférieure d'intercalaire, par exemple au sein de l'intercalaire de feuilletage, entre couche intermédiaire inférieure d'intercalaire et une couche intermédiaire supérieure d'intercalaire.

Par exemple, le film transparent teinté est film thermoplastique, de préférence flexible et courbé suivant la courbure du vitrage. Le film transparent teinté est par exemple : du polyester, notamment polytéréphtalate d'éthylène (PET), poly(téréphtalate de butylène) PBT, poly(naphtalate d'éthylène) (PEN), polyimide (PI), polyuréthane (PU) ou triacétate de cellulose (TAC), acrylique, polyoléfine notamment polypropylène (PP) polycarbonate (PC) ou PMMA, film (coextrudé) en PET-PMMA poly(chlorure de vinyle) PVC. Avec un film polymère en PC ou PMMA, on préfère, pour davantage de compatibilité chimique, comme couche d'intercalaire thermoplastique le polyuréthane thermoplastique (TPU). Il en est de même si on choisit une deuxième feuille de verre organique en PC ou en PMMA, on préfère une couche d'intercalaire thermoplastique, notamment une couche intermédiaire inférieure, par exemple le polyuréthane thermoplastique (TPU).

Comme couche intermédiaire supérieure bas indice de réfraction, qui n'est pas une couche d'intercalaire, on peut choisir de coller un film fluoropolymère, qui est un thermoplastique, sur la face F2, par exemple entre deux couches d'intercalaire formée à partir de PVB ou EVA. Le film en fluoropolymère peut être à base voire en l'une des matières suivantes : le perfluoroalkoxy PFA, notamment d'indice de réfraction d'environ 1,3, le poly(vinylidène fluoride) PVDF, notamment d'indice de réfraction d'environ 1,4,l'éthylène Chlorotrifluoroéthylène l'ECTFE, l'éthylène tétrafluoroéthylène l'ETFE , plus précisément poly(éthylène-co- tétrafluoroéthyléne, notamment d'indice de réfraction d'environ 1,4, le copolymère éthylène propylène perfluoré FEP ou (Fluorinated Ethylene Propylene en anglais) notamment d'indice de réfraction d'environ 1,3 ou le polytétrafluoroéthylène PTFE notamment d'indice de réfraction d'environ 1,3, le fluorure de polyvinyle (Polyvinyl Fluoride ou PVF).

Une couche intermédiaire de préférence supérieure ou inférieure selon l'invention peut être en matière polymère réticulé notamment une colle optique (dite OCA pour optically clear adhesive en anglais, LOCA si liquide).

L'avantage de cette couche adhésive est de pouvoir choisir à façon l'indice de réfraction et en particulier des couches bas indices sans sacrifier la transparence. Elle est donc particulièrement recherchée comme couche intermédiaire supérieure, locale ou formant couche d'intercalaire, ayant l'indice de réfraction n₂.

Pour la fabrication de cette couche (intermédiaire), on peut utiliser des adhésifs réticulables qui durcissent lorsque leurs composants réagissent (photoréticulable notamment sous ultraviolet, thermoréticulable etc) ou lorsqu'un solvant s'évapore. Dans tous les cas il y a réaction chimique afin de créer des liaisons chimiques pour la réticulation, le polymère réticulé définit alors, par la formation d'un réseau 3D, des chaines polymériques liées par des liaisons chimiques.

Ainsi la manière dont l'adhésif réticulable durcit dépend de sa nature, certains adhésifs (photo)réticulent notamment par apport d'énergie du type ultraviolets (UVA) ou visible (400-405nm). D'autres réticulent à température ambiante avec l'ajout d'un durcisseur par réaction chimique. D'autres adhésifs réticulables sont réticulés par réaction chimique initiée et favorisé grâce à un apport d'énergie thermique.

Un dépôt par voie liquide de l'adhésif réticulable peut se faire par pulvérisation (de l'anglais : spray coating), par application au rideau (de l'anglais : curtain coating), par aspersion (de l'anglais : flow coating), par application au rouleau (de l'anglais : roller coating), par écoulement laminaire à travers une fente (slot die), par trempage ou par coulée (dip coating), à la lame (blade coating), par sérigraphie (screen printing), par jet d'encre (inkjet), par coulée (drop casting) ou par remplissage d'une cavité avec une seringue notamment.

De préférence, la couche adhésive réticulée peut être photo-réticulée par irradiation ultraviolet. La couche adhésive, peut par exemple comporter une matrice polymère photo-réticulée par ultraviolet.

Selon un mode de réalisation, la couche adhésive réticulée est en particulier un film adhésif de préférence d'épaisseur d'au moins 30µm, et est de préférence un film sensible à la pression, de préférence choisi parmi les polymères à base d'acrylate, d'uréthane acrylate ou en fluoro uréthane acrylate ou de silicone ou est un revêtement adhésif de préférence d'épaisseur d'au moins 1µm.

Selon un autre mode de réalisation, la couche adhésive réticulée, est un film adhésif à base de polymère réticulé, notamment d'au moins 30µm, choisi parmi un film sensible à la pression, de préférence choisi parmi les polymères à base d'acrylate, d'uréthane acrylate ou en fluoro uréthane acrylate ou de silicone et un film dit post adhésif de polymère partiellement réticulé avant assemblage, et de préférence photoréticulé et à base d'acrylate.

En particulier pour un bas indice de réfraction (pour n₂ en particulier), la matière polymère réticulé de la couche adhésive réticulée est par exemple choisie parmi les polymères à base de polyacrylate, notamment d'uréthane acrylate ou de fluoro uréthane acrylate ou de fluoro-silicone acrylate, de polysiloxanes, de silicone, notamment de polydiméthylsiloxane, de polymère époxy ou de polyépoxydes, de polyuréthane, d'acétate de polyvinyle, de polyester.

En particulier la matière polymère réticulé de la couche adhésive réticulée est de préférence choisie parmi un polymère à base d'acrylate, notamment d'uréthane acrylate ou de silicone acrylate ou à base de silicone, et le polymère ayant en outre une fonction fluorée.

On peut citer les exemples suivants d'adhésif liquide (UV) réticulable pour un dépôt par voie liquide:
- adhésif à base d'uréthane acrylate par exemple de la société Norland, notamment le produit dénommé LOCA Norland NOA 1315, d'indice de réfraction 1,315, qui est un uréthane acrylate aliphatique,
- adhésif à base de fluoro uréthane acrylate par exemple de la société Shin-A, notamment le produit dénommé SFA 335 , d'indice n₁ compris entre 1,335 et 1,339, ou SFA 387 d'indice de réfraction compris entre 1,385 et1,389,
- adhésif à base d'acrylate par exemple notamment le produit dénommé UZ181A, d'indice de réfraction 1,47, de la société AKChemTeck, ou encore le produit dénommé UVEKOL S15, d'indice de réfraction 1,44, de la société Allnex.

On peut citer les adhésifs liquides à base de fluoro uréthane acrylate par exemple de la société Shin-A, notamment le produit dénommé LOCA Shin-A 335, d'indice de réfraction compris entre 1,335 et 1,339 ou 387, d'indice de réfraction compris entre 1,385 et 1,389.

Des adhésifs sensibles à pression (PSA) sont commercialisés sous forme de rouleaux d'adhésifs double face avec un liner sur chaque face pour protéger le film PSA.

On peut citer comme PSA à base de silicone les adhésifs de Dow Corning^{®}, de Taica tel que l'OPT alpha GEL^{®} tel que le K120E, K90E ou les adhésifs de MRK tel que le MR3050, MR3080.On peut citer comme PSA à base d'acrylate les adhésifs de Nitto tel que le CS98210U, CS98210UK ou les adhésifs de Tesa^{®} tel que le OCA 69206, OCA 69208, OCA 69405.

La tranche ou bord extérieur des couches peut être décalée du clair de vitre, notamment s'étendant sous une couche de masquage périphérique interne entre la face F2 et la face F3.

En outre, la face F4 peut comprendre un revêtement réfléchissant les rayonnements infrarouges (basse émissivité) avec une seule ou plusieurs couches fonctionnelles électroconductrices. De préférence, le revêtement de la face F4 est dénué de couche d'argent et/ou d'or. La couche fonctionnelle électroconductrice peut être à base d'oxyde et/ou à base de nitrure métallique. La couche fonctionnelle électroconductrice peut être tout particulièrement à base d'oxyde transparent conducteur ou couche TCO (pour oxyde transparent électro-conducteur) en particulier choisi parmi : l'oxyde d'étain dopé au fluor, l'oxyde d'étain dopé à l'antimoine et/ou l'oxyde d'indium et d'étain, l'oxyde de zinc dopé ou non à l'aluminium, au gallium ou à l'antimoine. La couche fonctionnelle électroconductrice TCO est de préférence une couche d'oxyde d'étain dopé au fluor (SnO2:F) ou une couche d'oxyde mixte d'étain et d'indium (ITO). En particulier le revêtement comprend une seule couche TCO et même de l'ITO. D'autres couches fonctionnelles électroconductrices TCO sont possibles, parmi lesquelles les couches minces à base d'oxydes mixtes d'indium et de zinc (appelées « IZO »), à base d'oxyde de zinc dopé au gallium ou à l'aluminium, à base d'oxyde de titane dopé au niobium, à base de stannate de cadmium ou de zinc, à base d'oxyde d'étain dopé à l'antimoine.

Le revêtement réfléchissant les infrarouges est de préférence muticouches, notamment déposé par pulvérisation magnétron, et comporte, une première sous couche diélectrique voire une deuxième sous couche diélectrique, en particulier:
- à base d'oxyde métallique ou de silicium : oxyde de zinc et d'étain, d'oxyde de zinc ou les couches à base d'oxyde de titane, de silice
- à base de nitrure ou d'oxynitrure métallique ou de silicium, notamment à base de nitrure d'un ou plusieurs éléments choisis parmi le silicium, l'aluminium ou le zirconium, de préférence à base de nitrure de silicium,
- ou de carbure ou d'oxycarbure de silicium.

Le vitrage selon l'invention, peut comporter entre la face F2 et la face F3 un dispositif électrocommandable avec un empilement formé à partir des éléments suivants : support diélectrique (film PET par exemple), électrode (transparente ITO par exemple), couche active, électrode, support diélectrique et notamment dispositif électrocommandable entre deux feuillets de l'intercalaire de feuilletage, qui est formé par exemple de PVB etc.

On peut choisir comme dispositif électrocommandable un dispositif parmi un dispositif à flou variable et un dispositif à teinte variable.

Un dispositif à flou variable est un dispositif à cristaux liquides, avec un empilement formé du support diélectrique, électrode, couche active, électrode, support diélectrique et notamment dispositif électrocommandable entre deux feuillets de l'intercalaire de feuilletage formé par exemple de PVB etc. Un dispositif à teinte variable est un dispositif électrochrome par exemple.

Le dispositif électrocommandable est par exemple, tout ou partie en vis-à-vis ou décalé des moyens d'extraction de lumière guidée, les moyens d'extraction étant le premier hologramme, et/ou le deuxième hologramme, et/ou le troisième hologramme. En outre, le dispositif électrocommandable est de préférence entre la face F2 et la première couche teintée, la première couche teintée étant par exemple la couche intermédiaire supérieure d'intercalaire teintée par exemple.

Entre la face F3 et la première couche teintée, on préfère éviter toute couche, d'au moins 10nm, qui est par exemple une électrode et, toute couche formée de métal pur ou nitruré par exemple, ou encore d'oxyde conducteur transparent ou même toute couche avec un coefficient d'extinction k, k étant la partie imaginaire de l'indice de réfraction complexe de ladite couche, d'au moins 10⁻⁴ ou même d'au moins 10⁻² dans le visible, en particulier à la longueur d'onde de référence par exemple 550nm et même sur la gamme spectrale de la source.

Le toit vitré selon l'invention peut comporter également une couche réfléchissant ou absorbant les infrarouges (contrôle solaire), en face F2 ou sur un film polymère, en particulier un empilement de couches minces dit bas émissif comprenant au moins une couche métallique telle que l'argent, là où chaque couche d'argent étant disposée entre des couches diélectriques. Dans cette configuration, la première couche teintée (d'intercalaire de préférence) est plus proche de la face F3 que cet empilement bas émissif et la première feuille de verre est claire et même toute couche, d'intercalaire par exemple, entre la face F3 et l'empilement bas émissif.

Plus largement, entre la première couche teintée et la face F3, on préfère éviter toute couche, d'au moins 10nm, formée de métal pur ou nitruré par exemple, ou encore d'oxyde conducteur transparent, ayant un coefficient d'extinction k, k étant la partie imaginaire de l'indice de réfraction complexe, d'au moins 10⁻⁴ ou même d'au moins 10⁻² dans le visible, en particulier à la longueur d'onde de référence par exemple 550nm et même sur la gamme spectrale de la source.

On préfère que la ou les couches intermédiaires inférieures et/ou supérieures, jusqu'à la première couche teintée, présentent un coefficient d'extinction k, partie imaginaire de l'indice de réfraction complexe, d'au plus 10⁻⁵ ou même 10⁻⁷ dans le visible, en particulier à la longueur d'onde de référence par exemple 550nm et même sur la gamme spectrale de la source.

L'intercalaire de feuilletage peut avoir une couche, supérieure ou teintée, ayant une face principale FA en contact adhésif avec la face F2 nue ou avec un revêtement fonctionnel sur la face F2. Le vitrage feuilleté peut comporter en effet une couche réfléchissant ou absorbant le rayonnement solaire, en face F2, en particulier un empilement de couches minces comprenant au moins une couche d'argent, là où chaque couche d'argent étant disposée entre des couches diélectriques.

L'intercalaire de feuilletage peut avoir une couche intermédiaire inférieure avec une face principale FB en contact adhésif avec la face F3 nue et avec la couche holographique.

Dans une zone proche de l'injection, le vitrage peut être masqué, avec une garniture, et/ou avec une couche de masquage périphérique.

Dans une réalisation, le vitrage comprend une couche de masquage interne, périphérique, opaque, entre la face F3 et la face F2, notamment couche de masquage interne en contact avec la face F2, notamment définissant le clair de vitre. Et/ou le vitrage peut comprendre une couche de masquage intérieure, périphérique, opaque, sur la face F4, notamment congruente ou de largeur inférieure à la largeur de la couche de masquage interne.

La couche de masquage périphérique opaque, interne, est notamment un émail, noir par exemple, sur la face F2. Ce peut être un revêtement opaque sur une couche adhésive thermoplastique, notamment couche intermédiaire supérieure d'intercalaire, en particulier PVB, par exemple revêtement opaque à base de PVB et avec agent colorant sur une face principale d'une couche PVB face orientée face F2 ou face F3.

La couche de masquage interne peut être à 2mm ou 3mm et de préférence à moins de 5 mm, de la tranche du toit vitré ou même jusqu'à la tranche. La couche de masquage interne peut être un bandeau encadrant le toit vitré et notamment un bandeau noir. On opacifie sur toute la périphérie du toit vitré pour cacher des éléments de carrosserie ou joints ou protéger une colle pour le montage sur le véhicule. La couche de masquage interne peut délimiter le clair de vitre. Il peut être avantageux que le bord externe de la couche isolatrice optique soit masqué par la couche de masquage interne, ne soit pas dans le clair de vitre.

La largeur de la couche de masquage interne le long des côtés d'un toit de véhicule automobile est généralement inférieure à celle à l'avant ou même à l'arrière.

Par exemple, pour le toit vitré, la largeur de la couche de masquage interne, et même intérieure, le long des bords longitudinaux du toit vitré, peut être d'au plus 30cm et notamment de 10 cm à 20 cm.

Par exemple, pour le toit vitré, la largeur de la couche de masquage interne, et même intérieure, le long du bord latéral arrière peut être d'au plus 30 cm et notamment d'au moins 1 cm ou 5 cm et le long du bord latéral avant d'au plus 60 cm notamment d'au moins 1 ou 5cm.

De préférence, la largeur de la couche de masquage interne est plus grande que celle de la couche de masquage intérieure.

La couche de masquage intérieure, périphérique, peut être en face F4 notamment faisant face à la couche de masquage interne, et même de nature identique par exemple un émail notamment noir sur deuxième feuille en verre minéral. La couche de masquage intérieure peut être à 2mm ou 3mm (moins de 5 mm) de la tranche du vitrage ou même jusqu'à la tranche.

La couche de masquage intérieure, notamment noire, peut être un bandeau et même un cadre. La couche de masquage intérieure peut être adjacente à un revêtement réfléchissant les infrarouges, en contact ou espacé.

La couche de masquage interne et/ou intérieure peut être un liant organique ou minéral, par exemple fritte de verre fondue, avec un agent colorant organique ou inorganique notamment colorant moléculaire ou pigment inorganique.

La couche de masquage interne et/ou intérieure est de préférence une couche continue (aplat avec un bord plein ou en variante un bord en dégradé (ensemble de motifs)).

L'épaisseur de chaque couche intermédiaire entre la face F2 et la face F3 est de préférence d'au plus 1,5mm ou 1,1mm ou 0,9mm et en particulier l'épaisseur de chaque intercalaire de feuilletage est d'au plus 1,1mm ou 0,9mm. L'épaisseur entre la face F1 et la face F4 est de préférence d'au plus 9mm ou 7mm, notamment pour un véhicule routier.

La première feuille de verre est de préférence en verre minéral éventuellement trempé notamment si elle est destinée à être la feuille extérieure et si la deuxième feuille est en verre organique. En particulier pour toit vitré de véhicule, la première feuille de verre (extérieure) est d'épaisseur de préférence d'au plus 2,5mm, même d'au plus 2,2mm - notamment 1,9mm, 1,8mm, 1,6mm et 1,4mm- et même d'épaisseur d'au moins 0,7mm.

La deuxième feuille de verre peut être d'épaisseur d'au moins 0,7mm, éventuellement inférieure à celle de la première feuille de verre extérieure, même d'au plus 2,2mm - notamment 1,9mm, 1,8mm, 1,6mm et 1,4mm- ou même d'au plus 1,3mm ou d'au plus 1mm.

L'épaisseur totale des première et deuxième feuilles de verre est de préférence strictement inférieure à 5 ou 4mm, même à 3,7mm.

Les première et deuxième feuilles de verre peuvent être de taille notamment sensiblement identiques, par exemple de forme générale rectangulaire. La première feuille de verre, si extérieure, peut avoir une taille plus importante que la deuxième feuille, si intérieure, dépassant ainsi cette deuxième feuille sur au moins une partie de son pourtour, éventuellement deuxième feuille, côté habitacle, plus petite avec une tranche en retrait notamment d'au plus 10 ou 5cm de la tranche de la première feuille de verre, sur un bord ou plusieurs bords, longitudinaux et/ou latéraux, notamment ou sur tout le pourtour.

La première feuille peut être un verre clair avec un revêtement fonctionnel athermique ou même chauffant sur la face F2.

La première feuille en verre minéral peut être à base de silice, sodocalcique, de préférence silicosodocalcique, voire aluminosilicate, ou encore borosilicate. Elle peut présenter une teneur pondérale en oxyde de fer total (exprimé sous la forme Fe2O3) d'au moins 0,4% et de préférence d'au plus 1,5 %.

La deuxième feuille en verre minéral peut être notamment à base de silice, sodocalcique, silicosodocalcique, ou aluminosilicate, ou borosilicate. Pour limiter l'absorption présente une teneur pondérale en oxyde de fer total (exprimé sous la forme Fe2O3) d'au plus 0,05% (500ppm), de préférence d'au plus 0,03% (300ppm) et d'au plus 0,015% (150ppm) et notamment supérieure ou égale à 0,005%. Le rédox de la deuxième feuille de verre est de préférence supérieur ou égal à 0,15.

Dans le présent texte, la transmission lumineuse est calculée à partir du spectre en transmission entre 380 et 780 nm en prenant en compte l'illuminant A et l'observateur de référence CIE 1964 (10°).

La transmission lumineuse et la teinte de chacune des feuilles de verre sont ajustées grâce à la composition chimique du verre et l'épaisseur de la feuille de verre. La composition chimique du verre comprend une base incolore, de préférence silico-sodo-calcique (mais d'autres verres peuvent être utilisés, notamment des verres borosilicates ou aluminosilicates), ainsi qu'une partie colorante. La partie colorante comprend notamment un ou plusieurs colorants choisis parmi les oxydes de métaux de transition - notamment les oxydes de fer (ferreux et ferrique), l'oxyde de cobalt, l'oxyde de chrome, l'oxyde de nickel, les oxydes de terres rares, notamment l'oxyde d'erbium, et le sélénium.

La première feuille de verre teinté est une feuille de verre ayant par exemple une transmission lumineuse entre 50 et 80%, notamment entre 60 et 75%. Elle comprend une partie colorante par exemple constituée d'oxydes de fer, en une teneur totale comprise entre 0,4 et 1,2% en poids, notamment entre 0,6 et 1,1 % en poids. Les verres obtenus sont alors verts, éventuellement vers-jaunes ou verts-bleus selon la proportion de fer ferreux. Selon d'autres exemples, de l'oxyde de cobalt, du sélénium et/ou de l'oxyde d'erbium sont ajoutés afin de conférer une teinte, par exemple bleue ou grise. Mieux encore, la première feuille de verre teinté, surteintée, est une feuille de verre ayant par exemple une transmission lumineuse entre 5 et 50%, notamment entre 8 et 40% et même d'au plus 20%. Elle comprend une partie colorante par exemple constituée d'oxydes de fer, en une teneur totale comprise entre 1,0 et 2,3% en poids, notamment entre 1,1 et 2,0% en poids, ainsi que des oxydes de cobalt et de chrome et/ou du sélénium. La partie colorante comprend par exemple les colorants suivants, dans les teneurs pondérales ci-après définies : Fe2O3 (fer total) de 1,2 à 2,3%, notamment de 1,5 à 2,2%, CoO de 50 à 400 ppm, notamment de 200 à 350 ppm, Se de 0 à 35 ppm, notamment de 10 à 30 ppm. Le rédox est de préférence compris entre 0,1 et 0,4, notamment entre 0,2 et 0,3. On entend par rédox le rapport pondéral entre la teneur en fer ferreux (exprimée en FeO) et la teneur en fer total (exprimée en Fe2O3). Les verres obtenus sont notamment verts ou gris.

La deuxième feuille de verre peut être en verre organique en particulier à base de polyuréthane (PU), de polycarbonate (PC), de poly(méthacrylate de méthyle) (PMMA), de poly(chlorure de vinyle) (PVC).

La deuxième feuille en verre organique peut être flexible pour suivre la courbure de la première feuille bombée ou la deuxième feuille verre organique peut être préformée. Avec un verre organique comme le PC ou le PMMA, on préfère, pour davantage de compatibilité chimique, au PVB comme couche d'intercalaire inférieure le polyuréthane thermoplastique (TPU) ou encore une matière polymère réticulé. On peut choisir aussi un EVA thermoplastique ou thermodurci.

Dans la présente invention, l'expression verre trempé signifie verre trempé thermiquement en l'absence de toute précision, et de préférence verre trempé pendant une opération de bombage du verre.

Pour le guidage des faisceaux lumineux, la deuxième feuille de verre minérale est de préférence claire et même extraclaire ou en verre organique clair et même extraclair. La deuxième feuille de verre a par exemple une transmission lumineuse d'au moins 85%, voire d'au moins 90%. Elle ne comprend généralement pas de partie colorante à l'exception d'impuretés inévitables, en particulier les oxydes de fer, en une teneur totale comprise entre 0,005 et 0,200% en poids, notamment entre 0,010 et 0,150% en poids, voire entre 0,030 et 0,120% en poids.

La deuxième feuille de verre peut (selon le rendu esthétique, l'effet optique souhaité, la destination du vitrage, etc.) avoir par exemple transmission lumineuse TL supérieure ou égale à 90% pour une épaisseur de 4 mm, et être formé par exemple à partir d'un verre de composition standard sodocalcique comme le Planilux^{®} de la société Saint-Gobain Glass, et même extra-clair (par exemple TL supérieure ou égale à 91,5% pour une épaisseur de 4 mm), par exemple un verre silico-sodo-calcique avec moins de 0,05% de Fe III ou de Fe2O3 comme le verre Diamant^{®} de Saint-Gobain Glass, ou Optiwhite^{®} de Pilkington, ou B270^{®} de Schott, ou d'autre composition décrite dans le document WO04/025334.

Le verre de la première feuille de verre peut avoir subi un traitement chimique ou thermique du type durcissement, recuit ou trempe (pour une meilleure résistance mécanique notamment) ou bombage, et est généralement obtenu par procédé float.

Le toit vitré lumineux peut présenter une transmission lumineuse, notée TL**,** non nulle dans tout ou partie du clair de vitre, généralement encadré par une couche de masquage. Pour le toit vitré, on préfère une transmission lumineuse TL non nulle et même d'au moins 0,5% ou d'au moins 2% et d'au plus 10% et même d'au plus 8%. La deuxième feuille de verre peut être alternativement en verre organique (de préférence rigide, semi rigide) comme un polyméthacrylate de méthyle (PMMA)- de préférence avec intercalaire de feuilletage (PU)-, un polycarbonate (PC)-de préférence avec intercalaire de feuilletage PVB-.

On peut notamment choisir pour l'empilement : première feuille de verre, intercalaire de feuilletage, deuxième feuille de verre, les empilements suivants:
- verre minéral, PVB( acoustique par exemple), verre minéral.
- verre minéral, intercalaire de feuilletage, polycarbonate,

Pour une meilleure isolation thermique, la première feuille de verre, ou autre couche, est teinté et de préférence surteinté,

La transmission lumineuse et la teinte de chacune des feuilles de verre sont ajustées grâce à la composition chimique du verre et l'épaisseur de la feuille de verre. La composition chimique du verre comprend une base incolore, de préférence silico-sodo-calcique,mais d'autres verres peuvent être utilisés, notamment des verres borosilicates ou aluminosilicates, ainsi qu'une partie colorante. La partie colorante comprend notamment un ou plusieurs colorants choisis parmi les oxydes de métaux de transition - notamment les oxydes de fer, ferreux et ferrique, l'oxyde de cobalt, l'oxyde de chrome, l'oxyde de nickel, les oxydes de terres rares, notamment l'oxyde d'erbium, et le sélénium.

La première feuille de verre teinté est une feuille de verre ayant par exemple une transmission lumineuse entre 50 et 80%, notamment entre 60 et 75%. Elle comprend une partie colorante par exemple constituée d'oxydes de fer, en une teneur totale comprise entre 0,4 et 1,2% en poids, notamment entre 0,6 et 1,1 % en poids. Les verres obtenus sont alors verts, éventuellement vers-jaunes ou verts-bleus selon la proportion de fer ferreux. Selon d'autres exemples, de l'oxyde de cobalt, du sélénium et/ou de l'oxyde d'erbium sont ajoutés afin de conférer une teinte, par exemple bleue ou grise, Les rayons lumineux reçus par le toit vitré sont émis par une source de lumière, de préférence comprise dans le toit vitré, émettant un faisceau lumineux dans le visible. La source de lumière est par exemple un ensemble de diodes électroluminescentes placées sur un premier support à circuit imprimé (comme un PCB pour « printed circuit board » en anglais), notamment une barrette, ou encore source de lumière qui comprend une fibre optique extractrice couplée avec source primaire de lumière, par exemple une ou plusieurs diodes électroluminescentes.

Les diodes électroluminescentes peuvent être préassemblées sur une ou des supports PCB ou des supports avec des pistes d'alimentation électrique, les supports PCB pouvant être fixées à d'autres supports, profilés par exemple. Le support PCB est généralement mince, notamment d'épaisseur inférieure ou égale à 3 mm, voire 1 mm, voire 0,1 mm ou inférieur le cas échéant à l'épaisseur d'un intercalaire de feuilletage. Plusieurs supports PCB peuvent être prévus, notamment si les zones à éclairer sont très distantes entre elles. Le support PCB peut être en matériau souple, diélectrique ou électroconducteur (métallique tel qu'aluminium etc), être composite, plastique, etc. La source de lumière peut être démontable, ajoutée, vendue séparément du vitrage ou en kit. De préférence, la source de lumière est périphérique, de préférence décalée du clair de vitre.

Selon un mode de réalisation, la source de lumière est monochromatique et émet un faisceau lumineux comprenant des ondes électromagnétiques dans le spectre dans une plage centrée autour de la longueur d'onde λ1 avec une largeur de bande spectrale de 60nm. Ainsi, le faisceau lumineux émis est de longueur d'onde λ1± 30 nm, avec λ1± 30 nm choisi parmi LB1 = 532nm± 30, LB2 = 480nm± 30, et LB3 = 680± 30. En particulier, LB1 correspond à la couleur verte, LB2 correspond à la couleur bleue, et LB3 correspond à la couleur rouge.

Selon un autre mode de réalisation, la source de lumière est polychromatique et émet un faisceau lumineux émettant à la première longueur d'onde λ1, à la deuxième longueur d'onde λ2 et à la troisième longueur d'onde λ3. La longueur d'onde λ1 est choisie parmi LB1= 532 nm±30nm (vert), LB2 =480nm±30nm (bleu) ou LB3= 680nm±30nm (rouge). La longueur d'onde λ2 est distincte de λ1 et est choisie parmi LB1= 532 nm±30nm (vert), LB2 =480nm±30nm (bleu) ou LB3= 680nm±30nm (rouge). La longueur d'onde λ3 est distincte de λ1 et est choisie parmi LB1= 532 nm±30nm (vert), LB2 =480nm±30nm (bleu) ou LB3= 680nm±30nm (rouge). En particulier, pour tous les indices des couches non holographiques, de préférence les conditions sont sur les indices sont vraies également à λ2 et λ3.

De préférence, la source de lumière est située sur une partie du vitrage située à l'intérieur de la garniture du véhicule, ce qui a pour fonction essentielle de la soustraire aux yeux des passagers du véhicule ainsi que de la protéger les modules des poussières et agressions externes.

Il est également connu, notamment du document WO 2013/110885, de percer un trou dans la feuille de verre et d'y disposer les diodes. Ce trou est réalisé proche du moyen d'extraction notamment de manière à raccourcir le chemin optique parcouru par la lumière entre les diodes et le moyen d'extraction. Il est ainsi possible de diminuer les pertes liées à l'absorption de la lumière. La lumière émise par les diodes est injectée dans la feuille de verre par une tranche additionnelle formée par le trou. La lumière rebondit ensuite entre les deux faces principales de la feuille de verre jusqu'à atteindre le moyen d'extraction. La zone lumineuse est à l'intérieur de l'habitacle, dans le cas d'un toit en particulier ou pour afficher une signalisation ou une information pour le conducteur ou à tout autre passager.

Le vitrage peut comprendre plusieurs sources de lumière, notamment à diodes électroluminescentes. Naturellement on peut avoir plusieurs sources de lumière (une ou plusieurs séries de diodes) couplées à la deuxième feuille.

Un autre aspect de l'invention concerne un véhicule comprenant un toit vitré selon l'une quelconque des revendications précédentes.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
Les [Fig. 1], [Fig. 1'], [Fig. 2], [Fig. 3], [Fig. 4], [Fig. 5], [Fig. 7], [Fig. 8], [Fig. 9], [Fig. 9'], [Fig. 10], [Fig. 10'], [Fig. 11] sont des modes de réalisation du toit vitré,
La [Fig. 12] est une représentation du procédé de gravure d'un hologramme d'une matrice de microlentilles,
La [Fig. 13] est une représentation d'une zone de Fresnel hors axe,
La [Fig.14] est une figure représentation l'efficacité intrinsèque de diffraction de l'hologramme d'un toit vitré, selon la direction d'observation 0° et la [Fig.14'] est un schéma légendé de la [Fig. 14] en noir et blanc.
La [Fig.15] est une figure représentation l'efficacité intrinsèque de diffraction de l'hologramme de même toit vitré que la [Fig. 14], selon la direction d'observation +30° et la [Fig.15'] est un schéma légendé de la [Fig. 15] en noir et blanc.
La [Fig.16] est une figure représentation l'efficacité intrinsèque de diffraction de l'hologramme de même toit vitré que la [Fig. 14], selon la direction d'observation - 30° et la [Fig.16'] est un schéma légendé de la [Fig. 16] en noir et blanc.

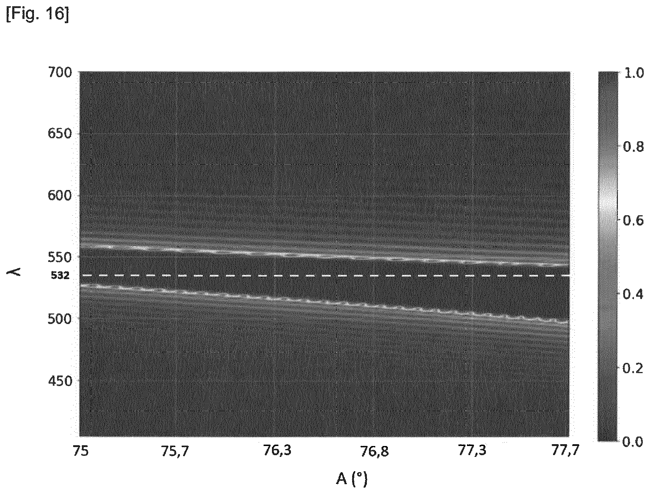

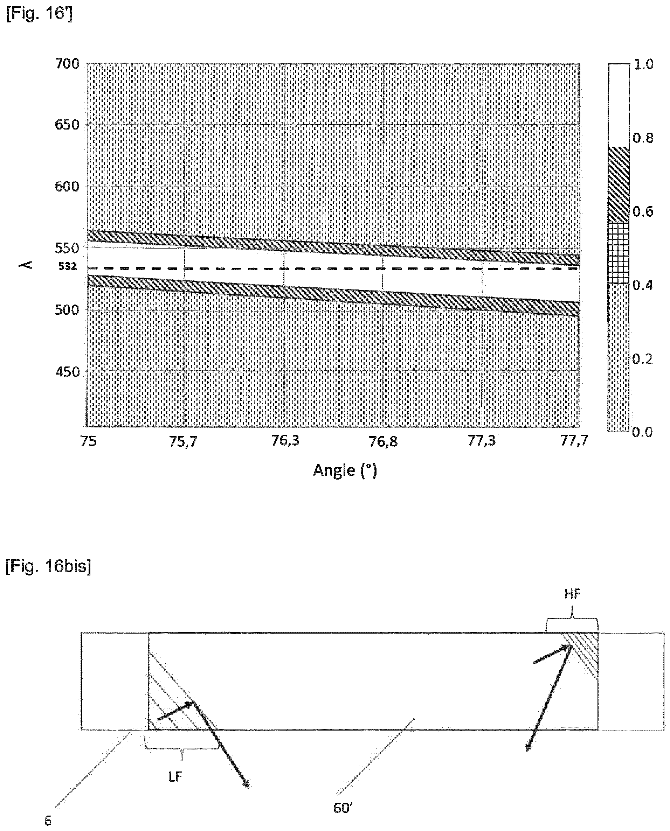

La [Fig. 16bis] représente l'acceptance angulaire et l'acceptance spectrale d'une zone de Fresnel,

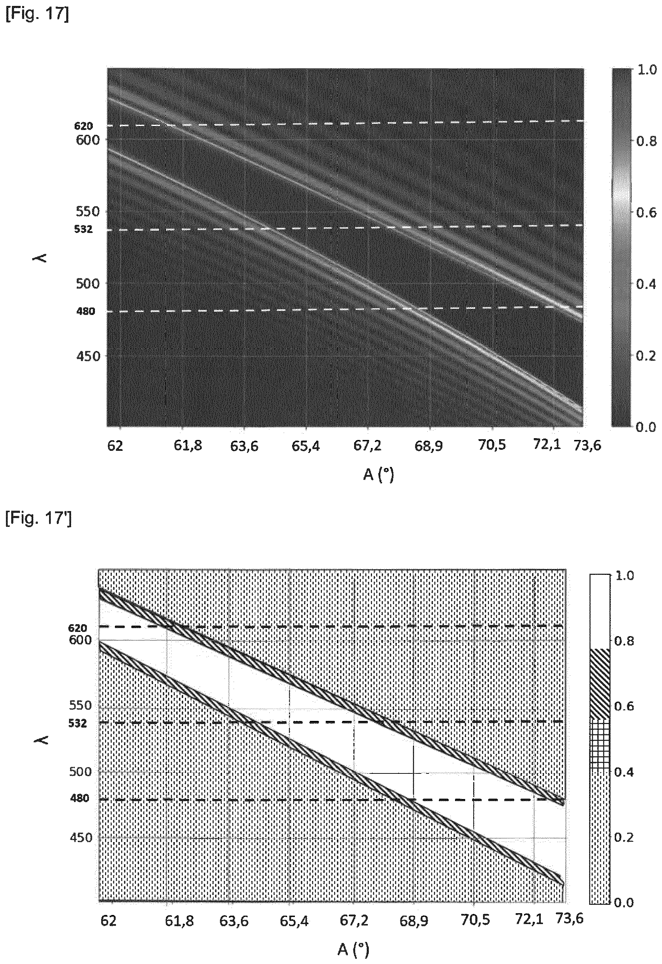

La [Fig.17] est une figure représentation l'efficacité intrinsèque de diffraction de l'hologramme d'un toit vitré, selon la direction d'observation +30° et la [Fig.17'] est un schéma légendé de la [Fig. 17] en noir et blanc.

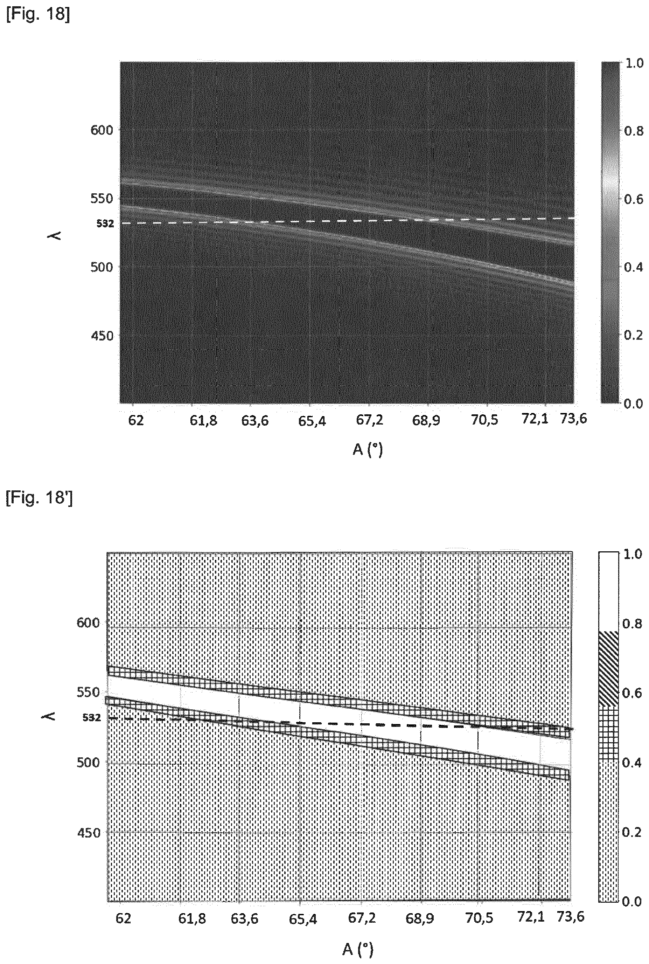

La [Fig.18] est une figure représentation l'efficacité intrinsèque de diffraction de l'hologramme d'un toit vitré, selon la direction d'observation -30° et la [Fig.18'] est un schéma légendé de la [Fig. 18] en noir et blanc.

### DESCRIPTION DETAILLEE

Les figures sont présentées à titre indicatif et nullement limitatif de l'invention. Dans la suite de la rédaction, une même référence sur différentes figures représente le même objet. Les figures ne sont pas à l'échelle.

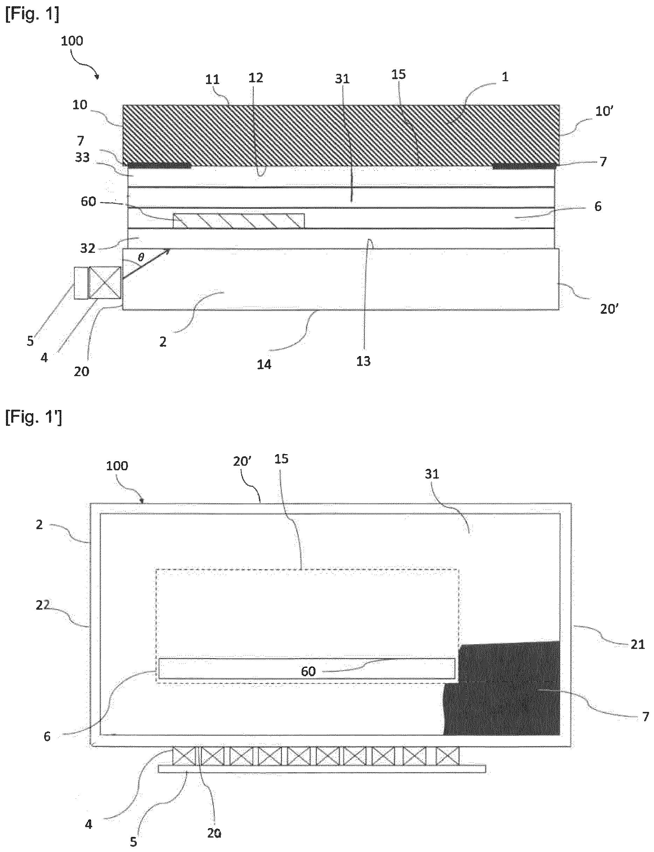

La [Fig. 1] est un mode de réalisation du toit vitré 100, comprenant la première feuille de verre 1, teintée, comprenant la face principale F1 11 orientée vers l'extérieur et la face principale F2 12 opposées, la deuxième feuille de verre (ou plastique alternativement) 2 comprenant la face F3 13 et la face F4 14 opposées, F4 étant orientée vers l'habitacle. La première feuille de verre 1 comprend la tranche 10 et la tranche opposée 10', et la deuxième feuille de verre comprend la tranche 20, du même côté que la tranche 10, et la tranche opposée 20' du même côté que la tranche 10'. Le toit vitré 100 comprend une couche de masquage 7, périphérique, sur la face F2 12, tel qu'un émail ou une encre noire. En particulier, le contour interne de la couche de masquage 7 (formant un cadre) définit le clair de vitre 15.

En référence à la [Fig. 1], le toit vitré 100 comprend en outre la couche holographique 6, comprenant la première zone fonctionnelle 60, et qui est entre la couche intermédiaire inférieure 32 (claire, en contact adhésif avec la face F3 13 de la deuxième feuille 2) et une première couche intermédiaire supérieure 31 claire par exemple ; il existe aussi une deuxième couche intermédiaire supérieure 33 (claire par exemple) en contact adhésif avec la face F2 12 de la première feuille 1, notamment couche intercalaire. Cette deuxième couche intermédiaire supérieure 33 est optionnelle notamment si la première couche intermédiaire supérieure 31 est adhésive (et alors en contact adhésif avec la face F2 12), intercalaire. Le toit vitré 100 comprend en outre une source lumineuse 4 émettant des rayons lumineux d'angle θ par exemple, l'injection lumineuse étant réalisée dans ce mode de réalisation par la tranche 20 de la deuxième feuille.

En particulier, n₂ est l'indice de réfraction le plus bas à λ1 dans le visible parmi les indices de réfraction de la ou des couches intermédiaires supérieures 31, 33, notamment d'intercalaire, entre la première couche holographique 6 exclue et jusqu'à la première couche teintée incluse.

En l'absence de couche intermédiaire supérieure teintée ou en l'absence de couche intermédiaire supérieure, n₂ est égal à nᵥ l'indice de réfraction de la première feuille de verre 1 (1,52 environ pour un verre)

En outre, n₁ est l'indice de réfraction le plus bas à λ1 parmi les indices de réfraction de la ou des couches intermédiaires inférieures éventuelles (dans ce cas par exemple la couche intermédiaire inférieure 32), de la première zone fonctionnelle et n₀, avec n₂ strictement inférieur à n₁

Dans ce mode de réalisation, la première couche intermédiaire supérieure 31, en contact de la première couche holographique 6, est réalisée en couche adhésive réticulée, OCA, bas indice, et la couche intermédiaire inférieure 32 est réalisée en PVB. La deuxième couche intermédiaire supérieure 33 est optionnelle, peut être une couche intercalaire en particulier PVB ou une couche non adhésive (revêtement sur la face F2 12). En outre, la première feuille de verre 1 est ici teintée. En particulier, dans ce mode de réalisation, n₁₁ est l'indice de réfraction de la couche intermédiaire inférieure 32, n₂₁ est l'indice de réfraction de la première couche intermédiaire supérieure 31 et n₂₂ est l'indice de réfraction de la deuxième couche intermédiaire supérieure 33 (la plus éloignée de la première couche holographique 6). Ainsi, dans ce mode de réalisation, n₁ est égal à l'indice de réfraction minimal entre n₁₁, n_{H1} et n₀ l'indice de réfraction de la deuxième feuille (1,52 environ pour un verre ou même plus pour une feuille plastique)

. En outre, dans ce mode de réalisation, n₂ est égal à l'indice de réfraction minimal entre n₂₁, n₂₂ et nv qui est ici n₂₁ si on choisit l'OCA bas indice. La deuxième couche intermédiaire supérieure 33 est optionnelle en particulier lorsque la première couche intermédiaire supérieure 31 est une couche adhésive, intercalaire.

Le toit 100 est adapté pour recevoir un faisceau lumineux dans la deuxième feuille de verre 2, de rayons lumineux injectés à λ1 dans la deuxième feuille de verre 2, avec une gamme θ1 d'angles d'incidence dans la deuxième feuille de verre 2. Lesdits rayons lumineux sont guidés dans le toit jusqu'à atteindre le premier hologramme de la première zone fonctionnelle 60. En particulier, la gamme θ1 d'angles est telle que arcsin (n₂/n₀) ≤θ1 ≤arcsin (n₁/n₀).

La fonction optique dudit premier hologramme est choisie telle qu'une portion des rayons guidés dans le toit atteint le premier hologramme et sont diffractés et extrait du toit du côté de la face F4 14, les rayons diffractés étant définis par une gamme d'angles d'incidence θ2 en face F4 14, la gamme d'angle θ2 étant comprise entre -arcsin (1/n₀) et arcsin (1/n₀).

La [Fig. 1'] est une vue du dessus du toit vitré 100 selon la [Fig. 1], de forme rectangulaire avec les diodes 4 le long du bord longitudinal 20 et même en option le long du bord longitudinal opposé 20' ou encore des bords latéraux 21, 22.

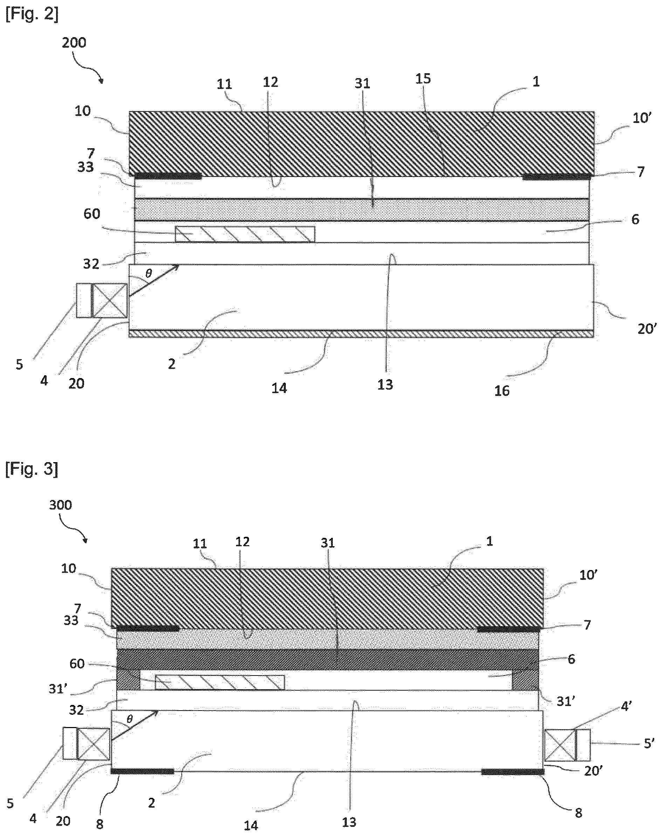

La [Fig. 2] est un toit vitré 200 qui diffère du toit 100 en ce que la première couche intermédiaire supérieure 31 du toit vitré 200 est teintée, formant la première couche teintée (la deuxième couche intermédiaire supérieure 33 et le verre 1 peuvent être clairs ou teintés), par exemple est un OCA teinté ou alternativement est un PVB teinté et alors la première couche intermédiaire inférieure 32 est en matériau distinct du PVB (d'indice de réfraction supérieur à 1,48, film ou revêtement sur la face F3 13). En outre, dans ce mode de réalisation, n₂ est égal à l'indice de réfraction n₂₁ (indice de réfraction de ladite première couche teintée la plus proche de la couche 6). Le toit vitré 200 comprend en outre une couche réfléchissant les infrarouges 16 (empilement avec ITO ou autre oxyde transparent conducteur) sur la face F4 14. La deuxième couche intermédiaire supérieure 33 est optionnelle en particulier lorsque la première couche intermédiaire supérieure 31 est une couche adhésive, intercalaire.

La [Fig. 3] est un mode de réalisation du toit vitré 300 qui diffère du toit 100 en ce que la première couche intermédiaire supérieure 31 du toit vitré 300 est en PVB teinté et la deuxième couche intermédiaire supérieure 33, optionnelle, en PVB, est claire. La couche intermédiaire inférieure 32 est en matériau distinct du PVB (d'indice de réfraction supérieur à 1,48, film ou revêtement sur la face F3 13). La deuxième couche intermédiaire supérieure 33 est optionnelle en particulier car la première couche intermédiaire supérieure 31 est une couche adhésive, intercalaire. Elle peut être utile en particulier si on veut augmenter l'épaisseur d'intercalaire et/ou si on insère un dispositif électrocommandable entre les couches intermédiaires supérieures 31 et 33. En outre, le toit vitré 300 comprend une deuxième couche de masquage 8, périphérique, sur la face F4 14 de la deuxième feuille de verre 2.

Le toit vitré 300 comprend en outre une deuxième source lumineuse 4' émettant des rayons lumineux, l'injection lumineuse étant également réalisée dans ce mode de réalisation par la tranche 20'.

La couche holographique 6 n'occupe ici pas la totalité de la surface du toit vitré et l'espace 31' non comblé par la couche holographique 6 est ici comblé par exemple par fluage de la première couche intermédiaire supérieure 31. Le fluage est suffisant ou non suivant l'épaisseur de la couche holographique 6. L'espace 31' comblé est par fluage par exemple ou par ajout de matière (cadre PVB par exemple) qui n'intervient pas dans la détermination de l'indice n₂ ou de l'indice n₁.

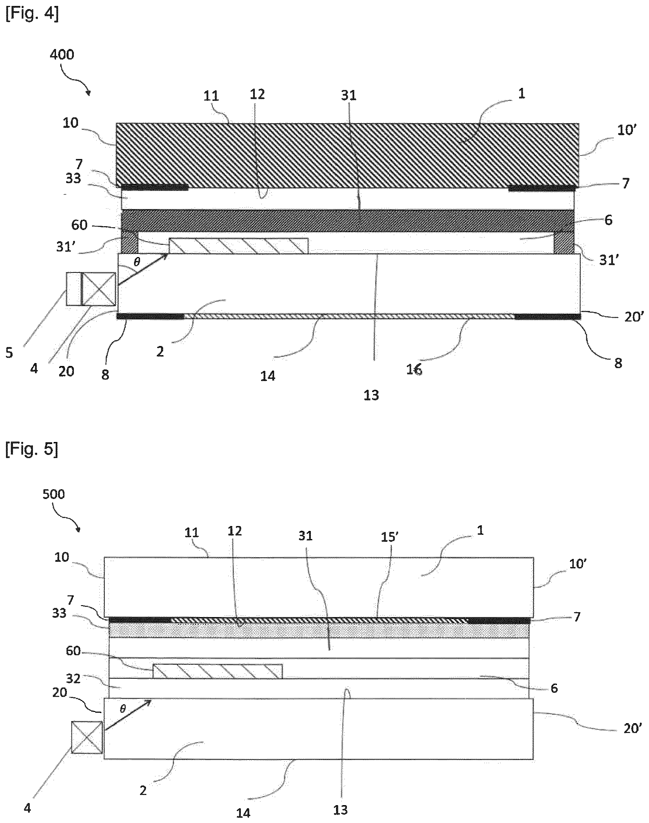

La [Fig. 4] est un mode de réalisation du toit vitré 400. Il diffère du toit vitré 100 en ce que la première feuille de verre 1 est incolore, la première couche intermédiaire supérieure 31 teintée, d'indice de réfraction inférieur à n_{V}, par exemple couche intercalaire, comme un PVB ou EVA teinté ou encore un OCA teinté, la couche intermédiaire inférieure 32 est absente. La deuxième couche intermédiaire supérieure 33, optionnelle, adhésive ou non, est teintée ou incolore. La couche holographique 6 est un revêtement sur la face F3 13 voire sur la première couche intermédiaire supérieure 31. Eventuellement, la couche holographique 6 n'occupe pas la totalité de la surface du toit vitré et l'espace 31' non comblé par la couche holographique 6 est ici comblé par exemple par du PVB ayant flué ou par ajout de matière (cadre PVB).

Le toit vitré 400 comprend en outre une couche réfléchissant les infrarouges 16 sur la face F4 14 de la deuxième feuille de verre.

La [Fig. 5] est un mode de réalisation du toit vitré 500 qui diffère du toit vitré 100 en ce que la première feuille de verre 1 est incolore, une couche réfléchissant les infrarouges 15' (empilement à base de couche(s) d'argent) sur la face F2 12 de la première feuille de verre 1 et en ce que la deuxième couche intermédiaire supérieure 33 est teintée.

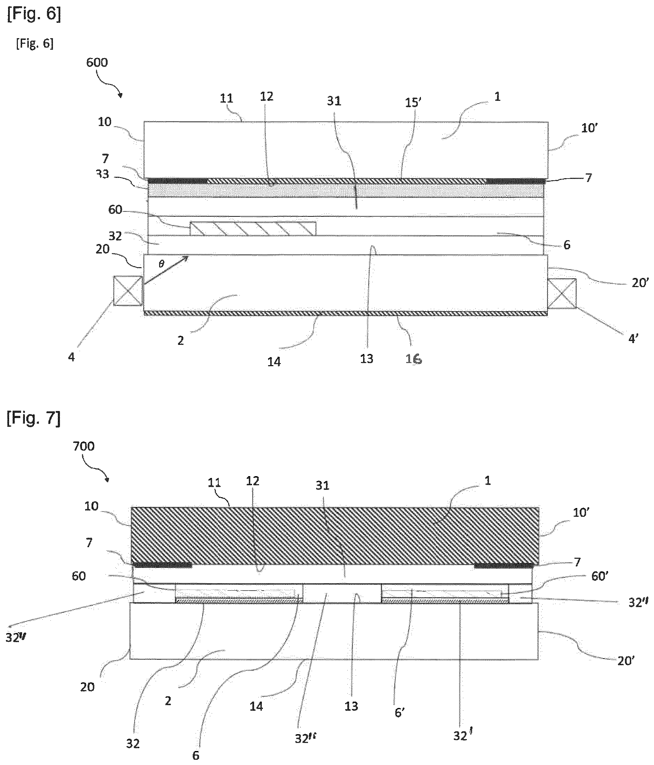

La [Fig. 6] est un mode de réalisation du toit vitré 600 qui diffère du toit vitré 100 en ce que la première feuille de verre 1 est incolore, la deuxième couche intermédiaire supérieure 33 est teintée, et en ce qu'il comprend la couche réfléchissant les infrarouges 16 sur la face F4 14 de la deuxième feuille de verre 2, et la couche réfléchissant les infrarouges 15' sur la face F2 12 de la première feuille de verre 1.

En référence à la [Fig. 6], la couche intermédiaire supérieure 33 est par exemple en PVB, la première couche intermédiaire supérieure 31 est en OCA, la couche intermédiaire inférieure 31 est en PVB.

Le toit vitré 600 comprend une deuxième source lumineuse 4', l'injection lumineuse étant ainsi également réalisée par la tranche 20' opposée à la tranche 20 de la deuxième feuille de verre 2.

La [Fig. 7] est un mode de réalisation du toit vitré 700 qui diffère du mode de réalisation du toit vitré 100 en ce qu'il ne comprend pas la deuxième couche intermédiaire supérieure, et en ce que la couche holographique est formée, dans ce mode de réalisation, d'une première partie 6 et une deuxième partie 6' ici disjointes.

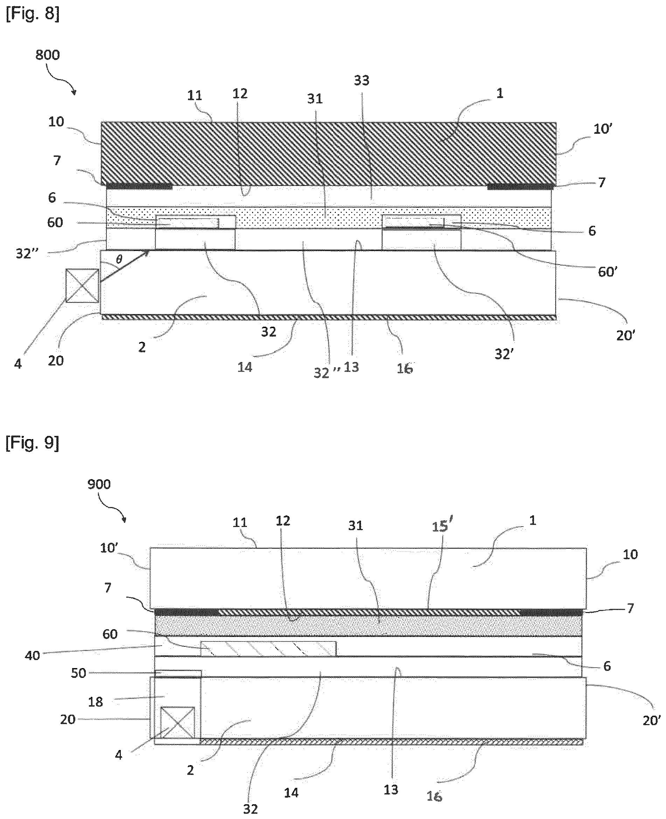

En référence à la [Fig. 7], la première partie 6 est déposée sur une première partie 32 de la couche intermédiaire inférieure disjointe et comprend une partie 60 de la première zone fonctionnelle. La deuxième partie 6' est déposée sur une deuxième partie 32' de la couche intermédiaire inférieure et comprend une deuxième partie 60' de la première zone fonctionnelle. En particulier, les parties de la couche holographique, de la couche intermédiaire inférieure ne s'étendent pas sur la totalité de la surface du toit vitré 700 et l'espace 32" non comblé par ces couches 32, 32', 6, 6' est comblé par fluage de la première couche intermédiaire supérieure 31, par exemple en PVB, par exemple ou par ajout de matière. L'injection de la lumière par la tranche 20 et/ou la tranche opposé 20' des bords longitudinaux n'est pas représentée. La [Fig. 8] est un mode de réalisation du toit vitré 800 qui diffère du toit vitré 100 en ce que la première couche intermédiaire supérieure 31, en particulier non adhésive, la (formant couche holographique) comprend une première partie 6 et une deuxième partie 6' de la couche holographique ici disjointe. La première partie 6 de la couche holographique comprend une première partie 60 de la zone fonctionnelle, et la deuxième partie 6' de la couche holographique comprend une deuxième partie 60' de la zone fonctionnelle.

Le toit vitré 800 comprend en outre la couche intermédiaire inférieure disjointe, une première partie 32 étant sous la première partie 6 de la couche holographique et une deuxième partie 32' étant sous la deuxième partie 6' de la couche holographique, les couches 32 et 32' étant entourées et espacées d'une couche intermédiaire 32" par exemple couche intercalaire en PVB.

En particulier, la deuxième couche intermédiaire supérieure 33 est en OCA clair par exemple.

Le toit vitré 800 comprend en outre la couche 16 réfléchissant les infrarouges, sur la face F4 14 de la deuxième feuille de verre 2.

Selon un autre mode de réalisation, l'injection de lumière issue de la source de lumière en couplage optique avec la deuxième feuille est par exemple réalisée par une paroi délimitant un trou fermé de la deuxième feuille de verre, notamment trou décalé d'un clair de vitre, faisant face à une couche de masquage interne sur la face F2 ou sur une couche d'intercalaire (PVB par exemple).

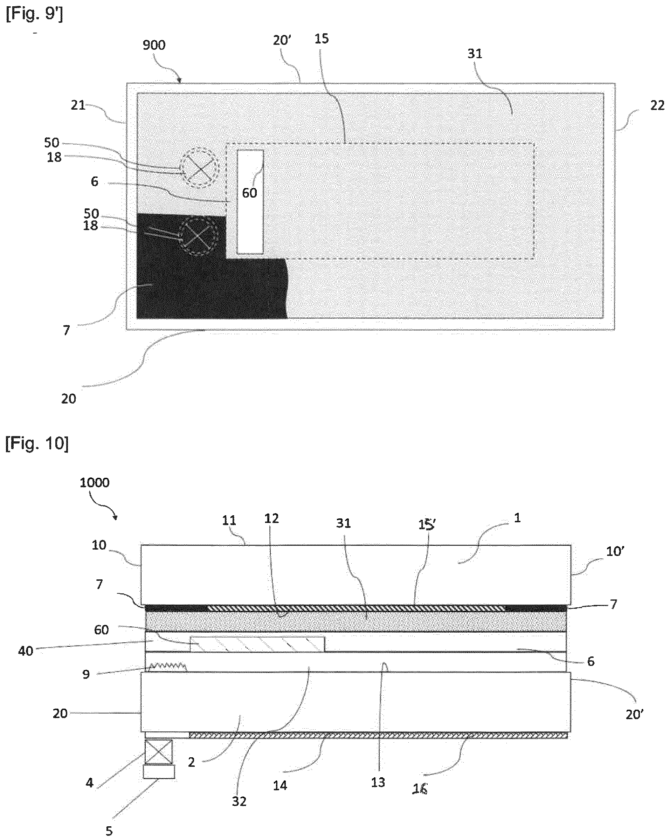

La [Fig. 9] est une représentation du toit vitré 900 qui diffère du toit vitré 600, représenté à la [Fig. 6], en ce qu'il ne comprend pas la deuxième source lumineuse 4' et en ce que la source lumineuse 4 est incrustée au sein de la deuxième feuille de verre 2 et notamment via un ou plusieurs trous traversant 18 réalisés dans ladite feuille de verre 2 et chacun fermés par une pastille métallique 50, trous proches du bord 20 par exemple longitudinal. Les trous 18 sont en amont de la première zone fonctionnelle 60 faisant face à une zone 40 de la couche 6 et sous la couche de masquage 7.

La [Fig. 9'] représente le toit vitré 900 de la [Fig. 9] dans une alternative et selon une vue du dessus, montrant les trous 50 ici proches d'un des bords latéraux 21, 22.

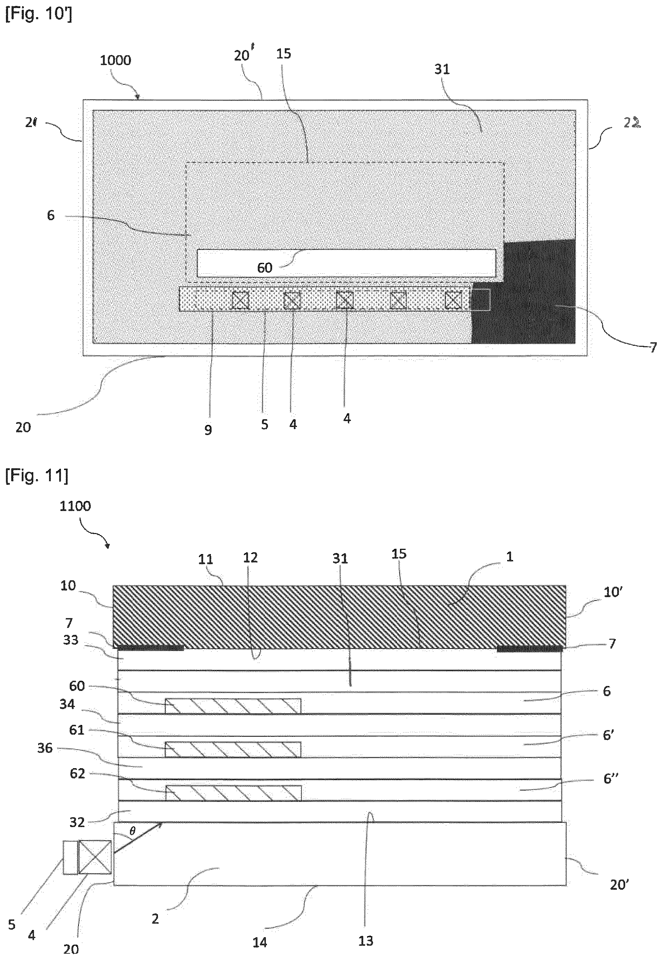

La [Fig. 10] est un mode de réalisation du toit vitré 1000 qui diffère du toit précédent 900 selon la [Fig. 9], de par l'injection de lumière utilisant un élément redirecteur de lumière 9 situé dans la couche intermédiaire inférieure 32. Dans ce mode de réalisation, l'injection de lumière issue de la source de lumière 4 dans la deuxième feuille de verre 2 est réalisée par l'élément de redirection de lumière 9 côté face F3 (ou face F4 selon un mode de réalisation non représenté), la source de lumière étant alors en regard ou décalée de la face F4 14. Le couplage optique étant notamment direct ou réalisé par l'intermédiaire d'une optique, notamment source de lumière et élément de redirection de lumière décalés du clair de vitre, faisant face à la couche de masquage 7 interne. En particulier, l'élément de redirection de lumière 9 est par exemple un film prismatique réflecteur côté face F3 ou transparent côté face F4. Il est en amont de la première zone fonctionnelle 60 faisant face à une zone 40 de la couche 6 et sous la couche de masquage 7

La [Fig. 10'] est une vue du dessus du toit vitré 1000 selon le mode de réalisation de la [Fig. 10] montrant l'étendue de l'élément de redirection de lumière 9 ici le long d'un des bords longitudinaux 20, 20'.

La [Fig. 11] est un toit vitré 1100 qui est une variante de réalisation de réalisation du toit vitré 100 de la [Fig. 1]. Dans ce mode de réalisation, une première couche holographique 6, une deuxième couche holographique 6' et une troisième couche holographique 6" sont intercalées entre la première couche intermédiaire supérieure 31 et la couche intermédiaire inférieure 32. En particulier, entre la première couche holographique 6 et la deuxième couche holographique 6' est intercalée une couche de préférence adhésive, intercalaire 34, et entre la deuxième couche holographique 6' et la troisième couche holographique 6" et est intercalée une couche de préférence adhésive, intercalaire 36.

La première couche holographique 6 comprend la première zone fonctionnelle 60, la deuxième couche holographique 6' comprend la deuxième zone fonctionnelle 61 et la troisième couche holographique 6" comprend la troisième zone fonctionnelle 62.

Selon un mode de réalisation, chaque zone fonctionnelle comprend un hologramme en volume.

Concernant le premier hologramme de la première couche holographique, la fonction optique dudit premier hologramme est choisie telle qu'une portion des rayons guidés dans le toit, dans la gamme θ1, atteint le premier hologramme et est diffractée et extraite du toit du côté de la face F4 14 du toit vitré.

De préférence, le premier hologramme est un réseau de diffraction, de préférence sinusoïdal. Le réseau de diffraction est de préférence un réseau de diffraction à pas constant ou un réseau de diffraction à pas variable.

Par exemple, le premier hologramme est un ensemble de zones de Fresnel hors axe, notamment obtenu à partir d'un réseau de microlentilles et en particulier obtenu à partir de l'enregistrement du champ transmis par un réseau (ou matrice) de micro-lentilles. En effet, l'hologramme d'une microlentille est une zone de Fresnel. Dans cet exemple, le premier hologramme comporte ainsi une pluralité d'hologrammes élémentaires, chaque hologramme élémentaire étant obtenu à partir d'une microlentille et correspondant à une zone de Fresnel. L'utilisation de l'hologramme d'un réseau de microlentilles est avantageuse car, pour obtenir un éclairage homogène lorsqu'on observe le toit dans une direction donnée et notamment à 0°, il faut extraire les rayons à l'intérieur d'un cône, ce qui avantageusement obtenu par un réseau de microlentilles ou, de manière équivalente, un réseau de zones de Fresnel.

Les deuxième et troisième hologrammes sont fabriqués de manière similaires au premier hologramme.

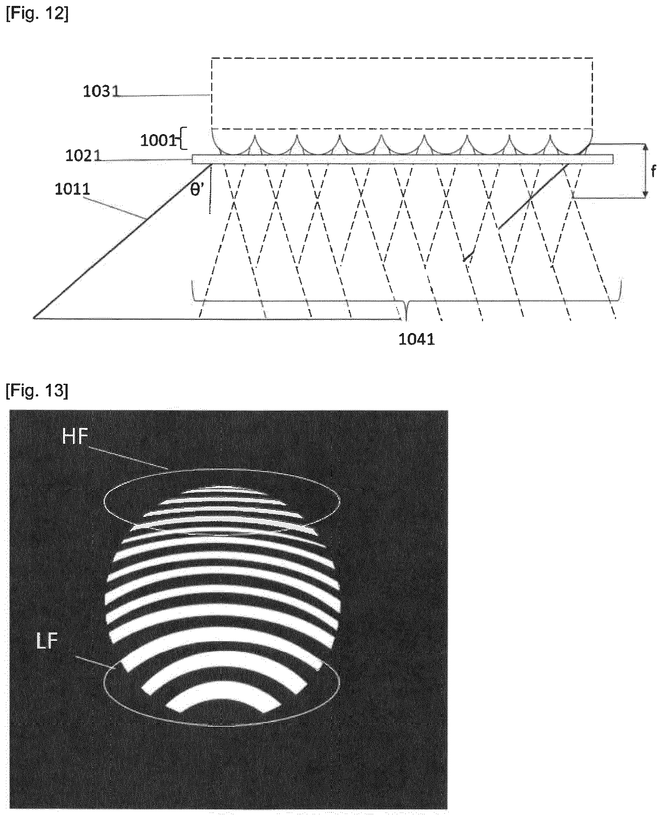

La [Fig. 12] est une figure représentant l'enregistrement d'un hologramme à partir d'une matrice de microlentilles 1001.

Dans le processus d'enregistrement, un ensemble 102 formé d'un substrat en verre sur lequel est fixé un matériau holographique est utilisé.

En particulier, l'ensemble 1021 est face à la partie convexe de chaque microlentille de la matrice de microlentilles 1001.

Lors de l'enregistrement d'un hologramme, un faisceau de signal plan 1031 illumine le côté plan de la matrice de microlentilles 100' qui génère un ensemble d'ondes sphériques 1041 du côté convexe de la matrice de microlentilles 100'.

En outre, un faisceau de référence 1011 comprenant des ondes planes, illumine la face convexe de chaque microlentille de la matrice de microlentilles 1001. Le faisceau de référence 1011 est incliné d'un angle θ' par rapport à la normale à l'ensemble 1021. Le matériau holographique de l'ensemble 1021 enregistre les interférences entre l'ensemble d'ondes sphériques 104 générées par la matrice de microlentilles 1001 et le faisceau de référence 101, la figure d'interférence obtenue étant un ensemble de zones de Fresnel, chaque zone de Fresnel correspondant à une microlentille.

La [Fig.13] est un exemple de zone de Fresnel hors axe, également appelée "zone plate" en anglais.

En particulier, d'après la description précédente de l'enregistrement d'un hologramme d'une microlentille, une zone de Fresnel, notée Z, peut être modélisée par l'addition d'une onde sphérique S et d'une onde plane inclinée P.

Ainsi, la zone de Fresnel est définie par la formule suivante : Z = S + P , S et P étant deux champs optiques, avec $S = S 0 * {e}^{i \frac{2 π}{λ} \sqrt{{R}^{2} + {x}^{2} + y}}$ et $P = P 0 * {e}^{i \frac{2 π}{λ} sin \left(θ′\right)}$. En particulier, S0 étant un facteur multiplicatif de même unité que S, et P0 étant un facteur multiplicatif de même unité que P.

Avec R la distance entre la source ponctuelle et l'hologramme et θ' l'angle de l'onde de référence par rapport à l'axe optique.

Les zones de Fresnel peuvent être considérées comme des réseaux dont la période (ou le pas) varie continuellement. Ainsi, chaque zone de Fresnel comprend un côté basse fréquence LF et un côté haute fréquence HF représentées à la [Fig. 13].

Comme précisé précédemment, les rayons diffractés et extraits du toit, par le premier hologramme, sont définis par une gamme d'angles d'incidence θ2 en face F4, θ2 étant inférieur à θ1, et défini tel qu'entre -arcsin (1/n₀) ≤θ2 ≤ arcsin (1/n₀). En particulier, la valeur 1 dans la formule arcsin (1/n₀) représente l'indice de réfraction de l'air.

La fonction optique dudit premier hologramme est en outre choisie telle que, parmi les rayons lumineux diffractés par l'hologramme, plus de 10% des rayons sont diffractés selon la gamme d'angle d'incidence θ2, voire plus de 50%, voire 70%.

Lorsque le domaine angulaire guidé dans l'hologramme est restreint, il faut plusieurs rebonds avant que chaque point de l'hologramme puisse voir plusieurs angles guidés. Pour un faisceau monochromatique, les différentes zones qui reçoivent de la lumière ne se superposent pas. Ainsi, la lumière est extraite de manière disjointe jusqu'à obtention d'une lumière continue. On obtient une extraction continue de la lumière après un nombre k de rebonds, k étant supérieur ou égal à 1. Le nombre k de rebonds est réalisé à partir d'une distance hₖ d'une extrémité de la couche holographique par rapport à la tranche du toit vitré, avec hₖ supérieure ou égale à *(2k* + 1) * *d* * (tan *θ*_{*k*1} - tan *θ*_{*k*2}), avec d l'épaisseur traversée par la lumière à partir de son injection dans la deuxième feuille de verre et jusqu'à la couche d'indice n₂. Par exemple, d peut être égale à l'épaisseur du deuxième de verre, des couches intermédiaires inférieures (le cas échant) et de la couche holographique. En outre, *θ*_{*k*1} est l'angle d'un premier rayon guidé, et *θ*_{*k*2} est l'angle d'un deuxième rayon guidé.

Selon le mode de réalisation dans lequel la source de lumière est polychromatique, le premier hologramme dit multibandes diffracte également à la deuxième longueur d'onde λ2, la première zone fonctionnelle ayant un indice de réfraction n_{H2} à λ2 voire diffracte également à la troisième longueur d'onde λ3, la première zone fonctionnelle ayant un indice de réfraction n_{H3} à λ3 ou en ce que le toit comprend un deuxième hologramme diffractant à λ2 entre le premier hologramme et la face F3.

Eventuellement, le toit vitré comprend une deuxième couche holographique ayant une deuxième zone fonctionnelle ayant un indice de réfraction n_{H2} à λ2 et éventuellement le toit comprend un troisième hologramme diffractant à λ3, entre le deuxième hologramme et la face F3, avec une troisième couche holographique avec une troisième zone fonctionnelle ayant un indice de réfraction n_{H3} à λ2 .

En d'autres termes, la couche holographique comprend soit une couche holographique comprenant un hologramme multibandes diffractant à λ1, λ2, λ3 ou le toit comprend des deuxième et troisième hologrammes diffractant respectivement à λ2, λ3 et λ0 est dans une bande spectrale (en particulier LB2) incluant la valeur du milieu parmi λ1, λ2, λ3,et le deuxième et troisième hologramme ont des longueurs d'onde d'inscription distinctes dans le visible λ'0 et λ"0, distinctes de λ0 dans une bande spectrale incluant une valeur distincte du milieu parmi λ1, λ2, λ3 (en particulier LB1 et LB3).

Lorsque la deuxième zone fonctionnelle est identique à la première zone fonctionnelle, le premier hologramme et le deuxième hologramme sont multiplexés, résultant en une combinaison linéaire de la fonction optique du premier hologramme et de la fonction optique du deuxième hologramme. Le premier hologramme peut alternativement diffracter sur deux gammes distinctes de longueurs d'onde.

En particulier, on note n₂ₐ l'indice de réfraction, le plus bas à λ2 dans le visible :
a) En cas de deuxième zone fonctionnelle, parmi les indices de réfraction à λ2 de la ou des couches intermédiaires inférieures au-dessus ( en allant vers la face F2) de la deuxième zone fonctionnelle, de la première zone fonctionnelle, de la ou des couches intermédiaires supérieures et jusqu'à la première couche teintée incluse,
b) ou en cas de premier hologramme multibande, parmi les indices de réfraction de la ou des couches intermédiaires supérieures (notamment d'intercalaire) entre la première couche holographique exclue et jusqu'à la première couche teintée incluse
c) ou en l'absence de couche intermédiaire supérieure teintée ou de couche intermédiaire supérieure, n₂ₐ étant égal à nᵥₐ avec nᵥₐ l'indice de réfraction à λ2 dans le visible de la première feuille
i) n₁ₐ est l'indice de réfraction le plus bas à λ2 parmi les indices de réfraction de la ou des couches intermédiaires inférieures éventuelles sous la deuxième zone fonctionnelle (vers la face F3) , l'indice n_{H2} de la deuxième zone fonctionnelle, et n₀ₐ qui est l'indice de réfraction à λ2 dans le visible de la deuxième feuille de verre.
j) ou en cas de premier hologramme multibandes, n₁ₐ est l'indice de réfraction le plus bas à λ2 parmi les indices de réfraction de la ou des couches intermédiaires inférieures éventuelles (sous la première zone fonctionnelle), l'indice n_{H2} de la première zone fonctionnelle, et n₀ₐ qui est l'indice de réfraction à λ2 dans le visible de la deuxième feuille

Le fonction optique dudit deuxième hologramme ou du premier hologramme multibandes est choisie telle qu'une portion de rayons lumineux injectés à λ2 dans la deuxième feuille de verre, guidés dans le toit, en particulier dans la gamme θ1, atteint le deuxième hologramme ou le premier hologramme multibandes et est diffractée et extraite du toit du côté de la face F4 dans toute ou partie de la gamme d'angles d'incidence θ2 en face F4, donc dans la deuxième feuille de verre, et comprise entre - arcsin (1/n₀ₐ) et arcsin (1/n₀ₐ).

Eventuellement, on définit n_{2b} l'indice de réfraction le plus bas à λ3 dans le visible:
a) en cas de troisième zone fonctionnelle, parmi les indices de réfraction à λ3 de la ou des couches intermédiaires inférieures au-dessus (en allant vers la face F2) de la troisième zone fonctionnelle (en incluant la deuxième zone fonctionnelle), de la première zone fonctionnelle, de la ou des couches intermédiaires supérieures et jusqu'à la première couche teintée incluse,
b) ou en cas de premier hologramme multibandes, parmi les indices de réfraction de la ou des couches intermédiaires supérieures (notamment d'intercalaire,) entre la première couche holographique exclue et jusqu'à la première couche teintée incluse
c) ou en l'absence de couche intermédiaire supérieure teintée ou de couche intermédiaire supérieure, n_{2b} étant égal à n_{vb} avec n_{vb} l'indice de réfraction à λ3 dans le visible de la première feuille

En particulier, n₁₆ est l'indice de réfraction le plus bas à λ3 parmi les indices de réfraction de la ou des couches intermédiaires inférieures éventuelles sous la troisième zone fonctionnelle (vers la face F3), l'indice n_{H3} de la troisième zone fonctionnelle, et n_{0b} qui est l'indice de réfraction à λ3 dans le visible de la deuxième feuille.

En particulier, la fonction optique dudit troisième hologramme ou du premier hologramme multibandes étant choisie telle qu'une portion de rayons lumineux injectés à λ3 dans la deuxième feuille de verre, guidés dans le toit, en particulier dans la gamme θ1, atteint le troisième hologramme ou le premier hologramme multibandes et est diffractée et extraite du toit du côté de la face F4 dans toute ou partie de la gamme d'angles d'incidence θ2 en face F4, dans la deuxième feuille de verre, et comprise entre -arcsin (1/n_{0b}) et arcsin (1/n_{0b}).

Selon le mode de réalisation précédent, pour une direction d'observation donnée dans la gamme θ2 :
- le premier hologramme diffracte à λ1 et a une efficacité de diffraction maximale dans une première sous gamme de θ1a de largeur d'au moins 1°,
- le deuxième hologramme ou le premier hologramme multibandes diffractant à λ2 a une efficacité de diffraction maximale dans une deuxième sous gamme de θ1b de largeur d'au moins 1° avec recouvrement partiel ou disjoint de θ1a
- le troisième hologramme éventuel ou le premier hologramme multibandes (voire le deuxième hologramme multibandes), diffractant à λ3, ayant une efficacité de diffraction maximale dans une troisième sous gamme de θ1c de largeur d'au moins 1° avec recouvrement partiel ou disjoint avec première et deuxième sous gammes θ1a et θ2a. En particulier, l'ensemble des sous gammes θ1a, θ1b, θ1c couvre de préférence au moins 60%, 80% de θ1.

En outre, n₁ₐ est l'indice de réfraction le plus bas à λ2 parmi les indices de réfraction de la ou des couches intermédiaires inférieures éventuelles, de la première zone fonctionnelle et n₀ₐ.

La troisième zone fonctionnelle peut être distincte de la première zone fonctionnelle et distincte de la deuxième zone fonctionnelle ou identique à la première zone fonctionne et identique à la deuxième zone fonctionnelle.

Lorsque la troisième zone fonctionnelle est distincte de la première zone fonctionnelle et de la deuxième zone fonctionnelle, le premier hologramme, le deuxième hologramme et le troisième hologramme sont empilés, le troisième hologramme étant dans une couche intermédiaire inférieure comportant ladite troisième zone fonctionnelle.

Lorsque la troisième zone fonctionnelle est identique à la première zone fonctionnelle et à la deuxième zone fonctionnelle, le premier hologramme, le deuxième hologramme et le troisième hologramme sont multiplexés, résultant en une combinaison linéaire de la fonction optique du premier hologramme, de la fonction optique du deuxième hologramme et de la fonction optique du troisième hologramme.

En particulier, la fonction optique dudit troisième hologramme étant choisie telle qu'une portion des rayons guidés dans le toit, dans la gamme θ1, atteint le troisième hologramme et est diffractée et extraite du toit du côté de la face F4 dans toute ou partie de la gamme d'angles d'incidence θ2 en face F4.

En particulier l'écart maximum entre les indices de réfractions n_{H1}, n_{H2}, n_{H3} pour LB1, LB2 et LB3 est d'au plus 0,2 et même d'au plus 0,1.

Considérons un mode de réalisation dans lequel le toit vitré (non représenté) comprend la première feuille de verre teintée, la deuxième feuille de verre d'indice n₀ = 1,52, la couche holographique en photopolymère et la première couche intermédiaire supérieure en PVB d'indice de réfraction n₂₁ = 1,485.

Dans ce mode de réalisation, le premier hologramme de la couche holographique est réalisé à partir d'une matrice de microlentilles et correspond donc à un ensemble de zones de Fresnel hors axe.

En particulier, la couche holographique a les indices suivants : n_{H1} = 1,481 pour λ1 = LB3, qui correspond au rouge, n_{H2} = 1,491 pour λ2 = LB1, qui correspond au vert et n_{H3} = 1,497 pour λ3 = LB2, qui correspond au bleu.

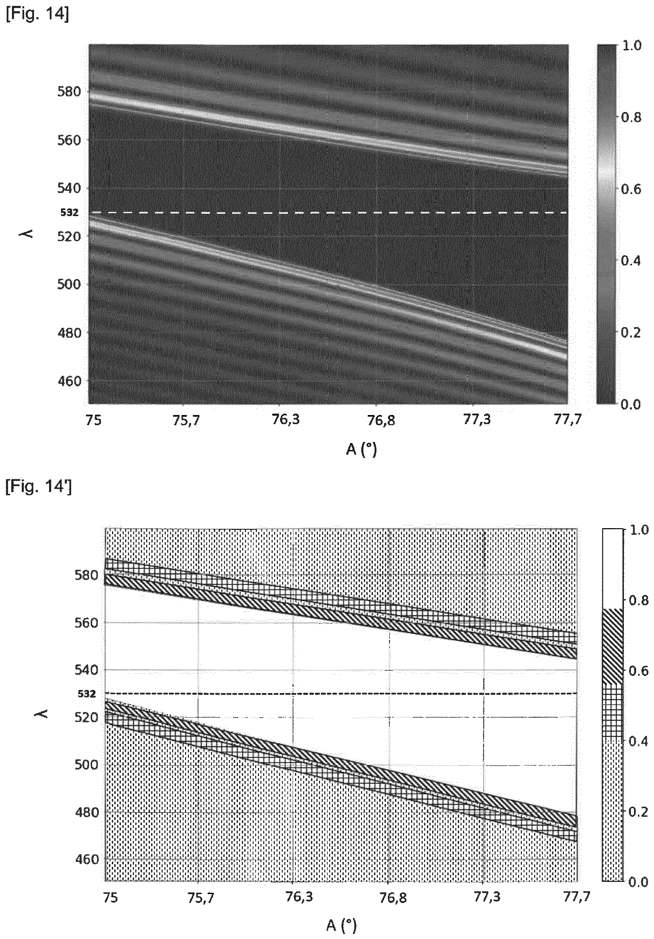

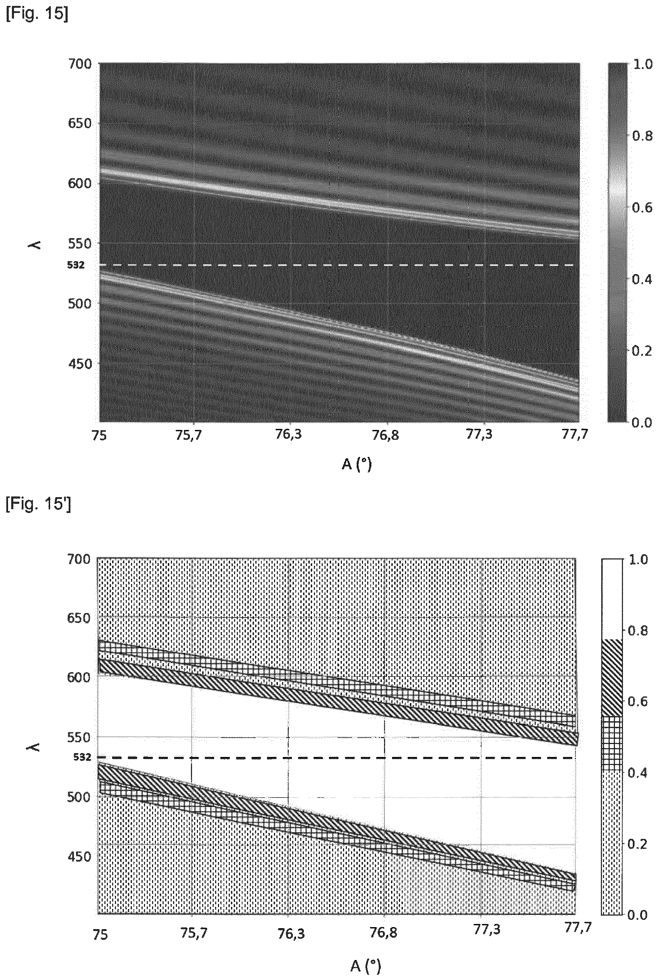

Les [Fig. 14], [Fig. 14'], [Fig. 15], [Fig. 15'], [Fig. 16], [Fig. 16'], [Fig. 17], [Fig. 17'] et [Fig. 18], [Fig. 18'] représentent chacune l'efficacité intrinsèque de diffraction du premier hologramme du toit vitré pour plusieurs modes de réalisation et plusieurs directions d'observations, et dans lesquelles les ordonnées représentent la longueur d'onde λ des rayons lumineux dans le vitrage, λ étant en nanomètre, et dans lesquelles les abscisses représentent l'angle A des rayons dans le toit vitré, A étant en degrés. L'efficacité intrinsèque est comprise entre 0 et 1.

La [Fig. 14] représente l'efficacité intrinsèque de diffraction du premier hologramme du toit vitré du mode de réalisation précédent en fonction de la longueur d'onde et des angles des rayons guidés dans le toit vitré, pour une direction d'observation à 0°. La [Fig. 14'] représente la [Fig. 14] en noir et blanc et légendée.

Les rayons lumineux de longueur d'onde λ1 = LB3 ne sont pas guidés dans le toit.

En particulier, les rayons lumineux de longueur d'onde λ2 = LB1 (vert) guidés ont un angle d'incidence dans la deuxième feuille de verre compris entre 75° et 77,7°. Pour cette longueur d'onde, on obtient une extraction continue de la lumière à partir de n = 5 rebonds des rayons guidés, à partir d'une distance h₅ = 4,8 cm.

En outre, les rayons lumineux de longueur d'onde λ3 = LB2 (bleu) guidés ont un angle d'incidence dans la deuxième feuille de verre compris entre 77,6° et 77,7°. Pour cette longueur d'onde, on obtient une extraction continue de lumière à partir de n = 2 rebonds des rayons guidés, à partir d'une longueur h₂ = 1,9 cm de la couche holographique.

En référence à la [Fig. 14], pour une lumière blanche, l'hologramme n'extrait que les rayons guidés ayant une longueur d'onde comprise entre 480 et 580 nm à peu près.

En référence à la [Fig. 14], pour des rayons incidents de longueur d'onde λ2=LB1 = 532 nm, ledit premier hologramme a une efficacité de diffraction théorique égale à 1, ou de manière équivalente à 100% pour tous les angles guidés, dans la direction d'observation à θ2 = 0°. En d'autres termes, pour un faisceau lumineux de longueur d'onde égale à 532 nm, tous les angles guidés sont extraits via la face F4. En outre, pour des rayons guidés ayant une longueur d'onde comprise entre 530 nm et 540 nm, tous les angles guidés sont extraits par le premier hologramme.

En référence à la [Fig.14], lorsque le premier hologramme diffracte sélectivement à λ3=LB2 = 480 nm, ledit hologramme a une efficacité de diffraction supérieure ou égale à 0.8, dans la direction d'observation à θ2 = 0° pour des angles guidés dont l'angle d'incidence est compris entre 77,6° et 77,7°.

La [Fig. 15] présente l'efficacité intrinsèque de diffraction du premier hologramme du toit cité dans le mode de réalisation précédent, dans une direction d'observation à θ2 = +30° qui correspond aux rayons guidés diffractés par le côté des basses fréquences spatiales des zones de Fresnel, présentées précédemment. La [Fig. 15'] représente la [Fig. 15] en noir et blanc et légendée.

En référence à la [Fig. 15], pour des rayons incidents de longueur d'onde λ2=LB1 = 532 nm, ledit premier hologramme a une efficacité de diffraction égale à 1, ou de manière équivalente à 100% pour tous les angles guidés, dans la direction d'observation à θ2 = +30°. En d'autres termes, pour un faisceau lumineux de longueur d'onde égale à 532 nm, tous les angles guidés sont extraits via la face F4. En outre, pour des rayons guidés ayant une longueur d'onde comprise entre 525 nm et 555 nm, tous les angles guidés sont extraits par le premier hologramme.

En référence à la [Fig. 15], lorsque le premier hologramme diffracte sélectivement à λ3=LB2 = 480 nm, ledit hologramme a une efficacité de diffraction théorique supérieure ou égale à 0.8, dans la direction d'observation à θ2 = +30° pour des angles guidés dont l'angle d'incidence est compris entre 77,2° et 77,7°.

La [Fig. 16] présente l'efficacité intrinsèque de diffraction du premier hologramme du toit cité dans le mode de réalisation précédent, dans une direction d'observation à θ2 = -30°, qui correspond aux rayons guidés diffractés par le côté des hautes fréquences spatiales des zones de Fresnel, présentées précédemment. La [Fig. 16'] représente la [Fig. 16] en noir et blanc et légendée.

En référence à la [Fig. 16], des rayons incidents de longueur d'onde λ2=LB1 = 532 nm, ledit premier hologramme a une efficacité de diffraction égale à 1, ou de manière équivalente à 100% pour tous les angles guidés, dans la direction d'observation à θ2 = -30°. En d'autres termes, pour un faisceau lumineux de longueur d'onde égale à 532 nm, tous les angles guidés sont extraits via la face F4. En outre, pour des rayons guidés ayant une longueur d'onde comprise entre 530nm et 552 nm, tous les angles guidés sont extraits par le premier hologramme.

Ainsi, la largeur spectrale sur laquelle tous les angles guidés sont extrait est de largeur inférieure à 15nm environ. En dehors de cette bande spectrale, l'efficacité de diffraction est comprise entre 0 et 0.1.

En référence aux [Fig.15] et [Fig.16], les rayons diffractés par le côté basse fréquence des zones de Fresnel se traduit par une couverture spectrale plus large et une couverture angulaire plus faible et les rayons diffractés par le côté haute fréquence des zones de Fresnel se traduit par une couverture spectrale plus faible et une couverture angulaire plus large.

La [Fig. 16bis] représente la diffraction côté basses fréquences BF et la diffraction côté hautes fréquentes ZF d'une zone de Fresnel et leurs couvertures spectrales, telles que décrites au paragraphe précédent.

Considérons un deuxième mode de réalisation dans lequel le toit vitré (non représenté) comprend la première feuille de verre teintée, la deuxième feuille de verre d'indice n₀ = 1,52, la couche holographique en photopolymère et la première couche intermédiaire supérieure en OCA d'indice de réfraction n₂₁ = 1.3

Dans ce deuxième mode de réalisation, le premier hologramme de la couche holographique est réalisé à partir d'une matrice de microlentilles et correspond donc à un ensemble de zones de Fresnel hors axe.

En particulier, la couche holographique comporte une modulation d'indice, avec n_{H1} = 1.481 pour λ1 = LB3, qui correspond au rouge, n_{H2} = 1.491 pour λ2 = LB1, qui correspond au vert et n_{H3} = 1.497 pour λ3 = LB2, qui correspond au bleu.

La [Fig. 17] présente l'efficacité intrinsèque de diffraction du premier hologramme du toit cité dans le deuxième mode de réalisation, dans une direction d'observation à θ2 = +30°, qui correspond aux rayons guidés diffractés par le côté des basses fréquences spatiales des zones de Fresnel, présentées précédemment. La [Fig. 17'] représente la [Fig. 17] en noir et blanc et légendée.

En référence à la [Fig. 17] pour des rayons incidents de longueur d'onde λ2=LB1 = 532 nm, ledit premier hologramme a une efficacité intrinsèque de diffraction théorique égale à 1, ou de manière équivalente à 100% pour des angles guidés avec ayant un angle incident compris entre 67.5° et 71.8° environ, dans la direction d'observation à θ2 = +30°.

En référence à la [Fig. 17], lorsque le premier hologramme diffracte sélectivement à λ3=LB2 = 480 nm, ledit hologramme a une efficacité intrinsèque de diffraction théorique égale à 1, dans la direction d'observation à θ2 = +30° pour des rayons guidés dont l'angle d'incidence est compris entre 70,5° et 73,6° environ.

En référence à la [Fig.17], lorsque le premier hologramme diffracte sélectivement à λ1=620 nm, ledit hologramme a une efficacité de diffraction intrinsèque théorique égale à 1, dans la direction d'observation θ2 = +30° pour des rayons guidés dont l'angle d'incidence est compris entre 51,9° et 61,6° environ.

La [Fig. 18] présente l'efficacité de diffraction intrinsèque du premier hologramme du toit cité dans le deuxième mode de réalisation, dans une direction d'observation à θ2 = -30°, qui correspond aux rayons guidés diffractés par le côté des hautes fréquences spatiales des zones de Fresnel, présentées précédemment. La [Fig. 18'] représente la [Fig. 18] en noir et blanc et légendée.

En référence à la [Fig. 18], pour des rayons incidents de longueur d'onde λ2=LB1 = 532 nm, ledit premier hologramme a une efficacité de diffraction intrinsèque théorique égale à 1, ou de manière équivalente à 100% pour des angles guidés avec ayant un angle incident compris entre 63,6° et 68,9° environ, dans la direction d'observation à θ2 = -30°.

En référence à la [Fig.18], quasiment aucun rayon rouge ni bleu n'est diffracté, l'efficacité de diffraction étant inférieure à 0,05.

L'ensemble des figures 14 et 18 illustrent les domaines de faisabilité de l'obtention d'un hologramme efficace à une ou plusieurs longueurs d'onde.

## Revendications

1. Toit vitré (100, 200, 300, 400, 500, 600, 700, 800, 900, 1000, 1100) feuilleté de véhicule comprenant :
- une première feuille (1) de verre minéral, dite externe, transparente, ayant une première face principale (11) dite face F1 et une deuxième face principale (12) dite face F2 opposée, d'indice de réfraction nᵥ à une première longueur d'onde λ1 dans le visible de préférence supérieur ou égal à 1,5
- une deuxième feuille (2) de verre, interne, en verre organique ou minéral, transparente, d'indice de réfraction n₀ à λ1, ayant une face principale (13) dite face F3 et une face principale (14) opposée dite face F4,
- entre la face F2 et la face F3, un intercalaire de feuilletage, diélectrique, en matière polymère, comportant au moins une couche d'intercalaire de feuilletage,
le toit vitré comprenant, entre la face F2 et F3, dans cet ordre en s'éloignant de F2:
- de préférence une ou plusieurs couches intermédiaires supérieures (31, 33) diélectriques, transparentes, d'indices de réfraction donnés dans le visible,
la première feuille (1) étant teintée et/ou parmi la ou les couches intermédiaires supérieures (31, 33) une première couche étant teintée,
lorsque plusieurs couches intermédiaires supérieures sont teintées, la première couche teintée est la couche teintée la plus proche de la face F3,
- une première couche holographique (6), transparente, diélectrique, comprenant une première zone fonctionnelle (60) avec un premier hologramme en volume, diffractant à λ1, la première zone fonctionnelle ayant un indice de réfraction n_{H1} à λ1
- de préférence, entre la première zone fonctionnelle et la face F3, une ou plusieurs couches intermédiaires inférieures (32), transparentes, diélectriques,
n₂ étant l'indice de réfraction le plus bas à λ1 dans le visible :
a) parmi les indices de réfraction de la ou des couches intermédiaires supérieures (31, 33), notamment d'intercalaire, entre la première couche holographique (6) exclue et jusqu'à la première couche teintée incluse
b) ou en l'absence de couche intermédiaire supérieure teintée ou en l'absence de couche intermédiaire supérieure n₂ étant égal à nᵥ
n₁ étant l'indice de réfraction le plus bas à λ1 parmi les indices de réfraction de la ou des couches intermédiaires inférieures éventuelles, de la première zone fonctionnelle et n₀, avec n₂<n₁
le toit étant adapté pour recevoir un faisceau lumineux dans la deuxième feuille de verre, de rayons lumineux injectés à λ1 dans la deuxième feuille de verre, avec une gamme θ1 d'angles d'incidence dans la deuxième feuille de verre, étant guidés dans le toit jusqu'à atteindre le premier hologramme et avec θ1 tel que arcsin (n₂/n₀) ≤θ1 ≤arcsin (n₁/n₀)
la fonction optique dudit premier hologramme étant choisie telle qu'une portion des rayons guidés dans le toit atteint le premier hologramme et sont diffractés et extrait du toit du côté de la face F4, rayons diffractés définis par une gamme d'angles d'incidence θ2 en face F4 , et comprise entre -arcsin (1/n₀) et arcsin (1/n₀).

2. Toit vitré (100, 200, 300, 400, 500, 600, 700, 800, 900, 1000, 1100) selon la revendication précédente **caractérisé en ce que** le premier hologramme est en réflexion.

3. Toit vitré (100, 200, 300, 400, 500, 600, 700, 800, 900, 1000, 1100) selon l'une des revendications précédentes **caractérisé en ce que** la première couche holographique est un revêtement, de préférence sur la face F3, ou la première couche holographique est un film.

4. Toit vitré (100, 200, 300, 400, 500, 600, 700, 800, 900, 1000, 1100) selon l'une des revendications précédentes **caractérisé en ce qu'**au moins une couche intermédiaire inférieure (32) est une couche adhésive en contact avec la première couche holographique et/ou au moins une couche intermédiaire supérieure (31,33) est une couche adhésive en contact avec la première couche holographique.

5. Toit vitré (100, 200, 300, 400, 500, 600, 700, 800, 900, 1000, 1100) selon l'une des revendications précédentes **caractérisé en ce que**:
- n₀ est compris entre 1,5 et 1,62 à λ1,
- n₂ est inférieur ou égal à 1,48 à λ1 voire à 1,45 et vaut de préférence au moins 1,3,
- nᵥ est compris entre 1,5 et 1,55 à λ1.

6. Toit vitré (100, 200, 300, 400, 500, 600, 700, 800, 900, 1000, 1100) selon l'une des revendications précédentes **caractérisé en ce que** n₂ est inférieur ou égal à 1,45 avec nᵥ supérieur à n₂.

7. Toit vitré (100, 200, 300, 400, 500, 600, 700, 800, 900, 1000, 1100) selon l'une des revendications précédentes **caractérisé en ce que** n₁ est supérieur ou égal à 1,48 et n₁ est supérieur à n₀, n₁ est inférieur ou égal à n_{H1}.

8. Toit vitré (100, 200, 300, 400, 500, 600, 700, 800, 900, 1000, 1100) selon l'une quelconque des revendications précédentes **caractérisé en ce que** le premier hologramme est un réseau de diffraction de préférence sinusoïdal.

9. Toit vitré (100, 200, 300, 400, 500, 600, 700, 800, 900, 1000, 1100) selon l'une quelconque des revendications précédentes **caractérisé en ce que** le premier hologramme est un ensemble de zones de Fresnel hors axe, notamment obtenu à partir d'un réseau de microlentilles.

10. Toit vitré (100, 200, 300, 400, 500, 600, 700, 800, 900, 1000, 1100) selon l'une quelconque des revendications précédentes **caractérisé en ce qu'**il comprend une source de lumière couplée optiquement à la deuxième feuille, en particulier source de lumière monochromatique à ladite première longueur d'onde λ1 et une largeur de bande à mi-hauteur de préférence d'au plus 30nm, λ1 est de préférence choisie dans une première gamme LB1 allant de 450 nm jusqu'à 510 nm exclu ou dans une deuxième gamme LB2 allant de 510 nm jusqu'à 560 nm exclu, ou dans une troisième gamme LB3 allant de 560 à 650 nm, ou mieux de 620nm à 650nm.

11. Toit vitré (100, 200, 300, 400, 500, 600, 700, 800, 900, 1000, 1100) selon la revendication précédente **caractérisé en ce qu'**une couche intermédiaire supérieure (31,33) est une couche d'intercalaire d'indice nᵢ égale à 1,48 dans le visible, et **en ce que** λ1 est égal à dans la première gamme LB2 ou LB1, de préférence LB2.

12. Toit vitré (100, 200, 300, 400, 500, 600, 700, 800, 900, 1000, 1100) selon l'une quelconque des revendications 1 à 9 **caractérisé en ce qu'**il comprend une source de lumière polychromatique, couplée optiquement à la deuxième feuille, en particulier la source de lumière polychromatique émettant :
- à ladite première longueur d'onde λ1 choisie parmi dans une première plage qui est dans une première gamme LB1 allant de 450 nm jusqu'à 510 nm exclu ou dans une deuxième gamme LB2 allant de 510 nm jusqu'à 560 nm exclu, ou dans une troisième gamme LB3 allant de 560 à 650 nm, ou mieux de 620nm à 650nm,
- à une deuxième longueur d'onde λ2 principale distincte de λ1 choisie dans une deuxième plage distincte de la première plage et qui est dans les première, deuxième ou troisième gammes LB1, LB2, LB3 ,
- et de préférence à une troisième longueur d'onde λ3 principale distincte de λ1 et λ2 et choisie dans une troisième plage distincte de la première plage et de la deuxième plage qui est dans les première, deuxième ou troisième gammes LB1, LB2, LB3
- de préférence la première plage est dans la LB2, la deuxième plage est dans LB1, la troisième plage est dans LB3.

13. Toit vitré (100, 200, 300, 400, 500, 600, 700, 800, 900, 1000, 1100) selon la revendication précédente **caractérisé en ce que** le premier hologramme dit multibandes diffracte également à la deuxième longueur d'onde λ2, la première zone fonctionnelle ayant un indice de réfraction n_{H2} à λ2 voire diffracte également à la troisième longueur d'onde λ3, la première zone fonctionnelle ayant un indice de réfraction n_{H3} à λ3 ou **en ce que** le toit comprend un deuxième hologramme diffractant à λ2 entre le premier hologramme et la face F3, avec une deuxième couche holographique ayant une deuxième zone fonctionnelle ayant un indice de réfraction n_{H2} à λ2 et éventuellement le toit comprend un troisième hologramme diffractant à λ3, entre le deuxième hologramme et la face F3, avec une troisième couche holographique avec une troisième zone fonctionnelle ayant un indice de réfraction n_{H3} à λ3,
n₂ₐ étant l'indice de réfraction le plus bas à λ2 dans le visible :
a) en cas de deuxième zone fonctionnelle, parmi les indices de réfraction à λ2 de la ou des couches intermédiaires inférieures au-dessus de la deuxième zone fonctionnelle, de la première zone fonctionnelle, de la ou des couches intermédiaires supérieures et jusqu'à la première couche teintée incluse,
b) ou en cas de premier hologramme multibande, parmi les indices de réfraction de la ou des couches intermédiaires supérieures entre la première couche holographique exclue et jusqu'à la première couche teintée incluse
c) ou en l'absence de couche intermédiaire supérieure teintée ou de couche intermédiaire supérieure, n₂ₐ étant égal à nva avec nva l'indice de réfraction à λ2 dans le visible de la première feuille
et
i) n₁ₐ étant l'indice de réfraction le plus bas à λ2 parmi les indices de réfraction de la ou des couches intermédiaires inférieures éventuelles sous la deuxième zone fonctionnelle, l'indice n_{H2} de la deuxième zone fonctionnelle, et n₀ₐ qui est l'indice de réfraction à λ2 dans le visible de la deuxième feuille
j) ou en cas de premier hologramme multibandes n₁ₐ étant l'indice de réfraction le plus bas à λ2 parmi les indices de réfraction de la ou des couches intermédiaires inférieures éventuelles (sous la première zone fonctionnelle), l'indice n_{H2} de la première zone fonctionnelle, et n₀ₐ qui est l'indice de réfraction à λ2 dans le visible de la deuxième feuille
la fonction optique dudit deuxième hologramme ou du premier hologramme multibandes étant choisie telle qu'une portion de rayons lumineux injectés à λ2 dans la deuxième feuille de verre, guidés dans le toit, atteint le deuxième hologramme ou le premier hologramme multibandes et est diffractée et extraite du toit du côté de la face F4 dans toute ou partie de la gamme d'angles d'incidence θ2 en face F4, et comprise entre -arcsin (1/n₀ₐ) et arcsin (1/n₀ₐ)
et éventuellement, n_{2b} étant l'indice de réfraction le plus bas à λ3 dans le visible :
a') en cas de troisième zone fonctionnelle, parmi les indices de réfraction à λ3 de la ou des couches intermédiaires inférieures au-dessus de la troisième zone fonctionnelle, de la première zone fonctionnelle, de la ou des couches intermédiaires supérieures et jusqu'à la première couche teintée incluse,
b') ou en cas de premier hologramme multibandes, parmi les indices de réfraction de la ou des couches intermédiaires supérieures entre la première couche holographique exclue et jusqu'à la première couche teintée incluse
c') ou en l'absence de couche intermédiaire supérieure teintée ou de couche intermédiaire supérieure, n_{2b} étant égal à n_{vb} avec n_{vb} l'indice de réfraction à λ3 dans le visible de la première feuille
et
n_{1b} étant l'indice de réfraction le plus bas à λ3 parmi les indices de réfraction de la ou des couches intermédiaires inférieures éventuelles sous la troisième zone fonctionnelle, l'indice n_{H3} de la troisième zone fonctionnelle, et n_{0b} qui est l'indice de réfraction à λ3 dans le visible de la deuxième feuille
la fonction optique dudit troisième hologramme ou du premier hologramme multibandes étant choisie telle qu'une portion de rayons lumineux injectés à λ3 dans la deuxième feuille de verre, guidés dans le toit, atteint le troisième hologramme ou le premier hologramme multibandes et est diffractée et extraite du toit du côté de la face F4 dans toute ou partie de la gamme d'angles d'incidence θ2 en face F4 , et comprise entre -arcsin (1/n_{0b}) et arcsin (1/n_{0b})
pour une direction d'observation donnée dans la gamme θ2 :
- le premier hologramme diffractant à λ1 ayant une efficacité de diffraction maximale dans une première sous gamme de θ1 a de largeur d'au moins 1°
- le deuxième hologramme ou le premier hologramme multibandes diffractant à λ2 ayant une efficacité de diffraction maximale dans une deuxième sous gamme de θ1b de largeur d'au moins 1° avec recouvrement partiel ou disjoint de θ1a
- le troisième hologramme éventuel ou le premier hologramme multibandes, diffractant à λ3, ayant une efficacité de diffraction maximale dans une troisième sous gamme de θ1c de largeur d'au moins 1° avec recouvrement partiel ou disjoint avec première et deuxième sous gammes θ1 a et θ2a.

14. Toit vitré selon l'une quelconque des revendications précédentes **caractérisé en ce qu'**il comprend :
- une première couche intermédiaire supérieure (31, 33), d'intercalaire, en matériau adhésif réticulé, d'indice de réfraction égal à n₂ de préférence d'au plus 1,45 à λ1
- une première couche intermédiaire inférieure (32), d'intercalaire, d'indice de réfraction d'au moins 1,48 à λ1, notamment PVB ou EVA
- une deuxième feuille de verre minéral.

15. Toit vitré selon l'une quelconque des revendications précédentes **caractérisé en ce que** la première couche holographique (60) est un photopolymère, la première zone fonctionnelle (60) a une modulation d'indice dn autour d'un indice de réfraction n_{H0} à une longueur d'onde d'inscription dans le visible λ0 qui est préférentiellement dans la bande spectrale d'une source de lumière monochromatique ou polychromatique couplée optiquement à la deuxième feuille

## Patentansprüche

1. Verbundglasdach (100, 200, 300, 400, 500, 600, 700, 800, 900, 1000, 1100) eines Fahrzeugs, umfassend:
- eine erste Scheibe (1) aus Mineralglas, als äußere, transparente Scheibe bezeichnet, aufweisend eine erste Hauptfläche (11), als Fläche F1 bezeichnet, und eine gegenüberliegende zweite Hauptfläche (12), als Fläche F2 bezeichnet, mit einem Brechungsindex nᵥ bei einer ersten Wellenlänge λ1 im sichtbaren Bereich, der vorzugsweise größer oder gleich 1,5 ist
- eine zweite, innere Glasscheibe (2) aus organischem Glas oder Mineralglas, die transparent ist, mit einem Brechungsindex n₀ bei λ1, die eine Hauptfläche (13), als Fläche F3 bezeichnet, und eine gegenüberliegende Hauptfläche (14), als Fläche F4 bezeichnet, aufweist,
- zwischen der Fläche F2 und der Fläche F3 eine dielektrische Verbundzwischenschicht aus Polymermaterial, mit mindestens einer Verbundzwischenlage,
wobei das Glasdach zwischen der Fläche F2 und F3 in dieser Reihenfolge ausgehend von F2 umfasst:
- vorzugsweise eine oder mehrere dielektrische, transparente obere Zwischenschichten (31, 33) mit gegebenen Brechungsindizes im sichtbaren Bereich,
wobei die erste Scheibe (1) getönt ist und/oder zwischen der/den oberen Zwischenschicht(en) (31, 33) eine erste Schicht getönt ist,
wenn mehrere obere Zwischenschichten getönt sind, die erste getönte Schicht die der Fläche F3 am nächsten liegende getönte Schicht ist,
- eine erste transparente, dielektrische holographische Schicht (6), umfassend eine erste funktionelle Zone (60) mit einem ersten Volumenhologramm, das bei λ1 beugt, wobei die erste funktionelle Zone einen Brechungsindex n_{H1} bei λ1 aufweist
- vorzugsweise zwischen der ersten funktionellen Zone und der Fläche F3 eine oder mehrere transparente, dielektrische untere Zwischenschichten (32),
wobei n₂ der niedrigste Brechungsindex bei λ1 im sichtbaren Bereich ist:
a) unter den Brechungsindizes der einen oder mehreren oberen Zwischenschichten (31, 33), insbesondere einer Zwischenlage, zwischen der ersten holographischen Schicht (6), ausschließlich, und bis zur ersten getönten Schicht, einschließlich
b) oder bei Fehlen einer getönten oberen Zwischenschicht oder bei Fehlen einer oberen Zwischenschicht, wobei n₂ gleich nᵥ ist,
wobei n₁ der niedrigste Brechungsindex bei λ1 unter den Brechungsindizes der einen oder mehreren etwaigen unteren Zwischenschichten, der ersten funktionellen Zone und n₀ ist und mit n₂<n₁,
wobei das Dach angepasst ist, um ein Lichtbündel in der zweiten Glasscheibe zu empfangen, wobei Lichtstrahlen, die bei λ1 in die zweite Glasscheibe eingekoppelt werden, mit einem Bereich θ1 von Einfallswinkeln in der zweiten Glasscheibe im Dach geführt werden, bis sie das erste Hologramm erreichen, und mit θ1, sodass arcsin (n₂/n₀) ≤θ1 ≤arcsin (n₁/n₀),
wobei die optische Funktion des ersten Hologramms so ausgewählt ist, dass ein Teil der in dem Dach geführten Strahlen das erste Hologramm erreicht und gebeugt wird und auf der Seite der Fläche F4 aus dem Dach ausgekoppelt wird, wobei die gebeugten Strahlen durch einen Bereich von Einfallswinkeln θ2 an der Fläche F4 definiert sind, der zwischen -arcsin (1/n₀) und arcsin (1/n₀) liegt.

2. Glasdach (100, 200, 300, 400, 500, 600, 700, 800, 900, 1000, 1100) nach dem vorstehenden Anspruch, **dadurch gekennzeichnet, dass** das erste Hologramm in Reflexion ist.

3. Glasdach (100, 200, 300, 400, 500, 600, 700, 800, 900, 1000, 1100) nach einem der vorstehenden Ansprüche, **dadurch gekennzeichnet, dass** die erste holographische Schicht eine Beschichtung ist, vorzugsweise auf der Fläche F3, oder die erste holographische Schicht eine Folie ist.

4. Glasdach (100, 200, 300, 400, 500, 600, 700, 800, 900, 1000, 1100) nach einem der vorstehenden Ansprüche, **dadurch gekennzeichnet, dass** mindestens eine untere Zwischenschicht (32) eine Klebeschicht in Kontakt mit der ersten holografischen Schicht ist und/oder mindestens eine obere Zwischenschicht (31, 33) eine Klebeschicht in Kontakt mit der ersten holografischen Schicht ist.

5. Glasdach (100, 200, 300, 400, 500, 600, 700, 800, 900, 1000, 1100) nach einem der vorstehenden Ansprüche, **dadurch gekennzeichnet, dass**:
- n₀ zwischen 1,5 und 1,62 bei λ1 liegt,
- n₂ kleiner oder gleich 1,48 bei λ1 oder sogar 1,45 und vorzugsweise mindestens 1,3 ist,
- nᵥ zwischen 1,5 und 1,55 bei λ1 liegt.

6. Glasdach (100, 200, 300, 400, 500, 600, 700, 800, 900, 1000, 1100) nach einem der vorstehenden Ansprüche, **dadurch gekennzeichnet, dass** n₂ kleiner oder gleich 1,45 ist, wobei nᵥ größer als n₂ ist.

7. Glasdach (100, 200, 300, 400, 500, 600, 700, 800, 900, 1000, 1100) nach einem der vorstehenden Ansprüche, **dadurch gekennzeichnet, dass** n₁ größer oder gleich 1,48 ist und n₁ größer als n₀ ist, n₁ kleiner oder gleich n_{H1} ist.

8. Glasdach (100, 200, 300, 400, 500, 600, 700, 800, 900, 1000, 1100) nach einem der vorstehenden Ansprüche, **dadurch gekennzeichnet, dass** das erste Hologramm ein vorzugsweise sinusförmiges Beugungsgitter ist.

9. Glasdach (100, 200, 300, 400, 500, 600, 700, 800, 900, 1000, 1100) nach einem der vorstehenden Ansprüche, **dadurch gekennzeichnet, dass** das erste Hologramm eine Anordnung von außeraxialen Fresnel-Zonen ist, insbesondere erhalten aus einem Mikrolinsenarray.

10. Glasdach (100, 200, 300, 400, 500, 600, 700, 800, 900, 1000, 1100) nach einem der vorstehenden Ansprüche, **dadurch gekennzeichnet, dass** es eine optisch an die zweite Scheibe gekoppelte Lichtquelle umfasst, insbesondere eine monochromatische Lichtquelle bei der ersten Wellenlänge λ1 und einer Halbwertsbreite von vorzugsweise höchstens 30 nm, wobei λ1 vorzugsweise aus einem ersten Bereich LB1 von 450 nm bis ausschließlich 510 nm oder aus einem zweiten Bereich LB2 von 510 nm bis ausschließlich 560 nm oder aus einem dritten Bereich LB3 von 560 bis 650 nm, oder besser von 620 nm bis 650 nm, ausgewählt ist.

11. Glasdach (100, 200, 300, 400, 500, 600, 700, 800, 900, 1000, 1100) nach dem vorstehenden Anspruch, **dadurch gekennzeichnet, dass** eine obere Zwischenschicht (31, 33) eine Zwischenschicht mit einem Index nᵢ gleich 1,48 im sichtbaren Bereich ist, **und dadurch, dass** λ1 gleich ist in dem ersten Bereich LB2 oder LB1, vorzugsweise LB2.

12. Glasdach (100, 200, 300, 400, 500, 600, 700, 800, 900, 1000, 1100) nach einem der Ansprüche 1 bis 9, **dadurch gekennzeichnet, dass** es eine polychromatische Lichtquelle umfasst, die optisch mit der zweiten Scheibe gekoppelt ist, wobei die polychromatische Lichtquelle insbesondere emittiert:
- bei der ersten Wellenlänge λ1, ausgewählt aus einer ersten Spanne, die in einem ersten Bereich LB1 von 450 nm bis ausschließlich 510 nm, oder in einem zweiten Bereich LB2 von 510 nm bis ausschließlich 560 nm, oder in einem dritten Bereich LB3 von 560 bis 650 nm, oder besser von 620 nm bis 650 nm, liegt,
- bei einer zweiten Hauptwellenlänge λ2, die von λ1 verschieden ist, ausgewählt aus einer zweiten Spanne, die von der ersten Spanne verschieden ist, und die in dem ersten, zweiten oder dritten Bereich LB1, LB2, LB3 liegt,
- und vorzugsweise bei einer dritten Hauptwellenlänge λ3, die von λ1 und λ2 verschieden ist und aus einer dritten Spanne ausgewählt ist, die von der ersten Spanne und der zweiten Spanne verschieden ist und die in dem ersten, zweiten oder dritten Bereich LB1, LB2, LB3 liegt
- wobei vorzugsweise die erste Spanne in der LB2, die zweite Spanne in LB1, die dritte Spanne in LB3 liegt.

13. Glasdach (100, 200, 300, 400, 500, 600, 700, 800, 900, 1000, 1100) nach dem vorstehenden Anspruch**, dadurch gekennzeichnet, dass** das erste, als Mehrband-Hologramm bezeichnete Hologramm auch bei der zweiten Wellenlänge λ2 beugt, wobei die erste funktionelle Zone bei λ2 einen Brechungsindex n_{H2} aufweist, oder sogar auch bei der dritten Wellenlänge λ3 beugt, wobei die erste funktionelle Zone bei λ3 einen Brechungsindex n_{H3} aufweist, **oder dadurch, dass** das Dach zwischen dem ersten Hologramm und der Fläche F3 ein zweites, bei λ2 beugendes Hologramm umfasst, mit einer zweiten holografischen Schicht, die eine zweite funktionelle Zone mit einem Brechungsindex n_{H2} bei λ2 aufweist, und gegebenenfalls das Dach ein drittes, bei λ3 beugendes Hologramm umfasst, zwischen dem zweiten Hologramm und der Fläche F3, mit einer dritten holografischen Schicht mit einer dritten funktionellen Zone, die bei λ3 einen Brechungsindex n_{H3} aufweist,
wobei n₂ₐ der niedrigste Brechungsindex bei λ2 im sichtbaren Bereich ist:
a) im Falle einer zweiten funktionellen Zone, unter den Brechungsindizes bei λ2 der einen oder mehreren unteren Zwischenschichten über der zweiten funktionellen Zone, der ersten funktionellen Zone, der einen oder mehreren oberen Zwischenschichten und bis einschließlich der ersten getönten Schicht,
b) oder im Falle eines ersten Mehrband-Hologramms unter den Brechungsindizes der einen oder mehreren oberen Zwischenschichten zwischen der ersten holografischen Schicht, diese ausgeschlossen, und bis zur ersten getönten Schicht, diese eingeschlossen
c) oder in Abwesenheit einer getönten oberen Zwischenschicht oder einer oberen Zwischenschicht, wobei n₂ₐ gleich nva ist, wobei nva der Brechungsindex bei λ2 im sichtbaren Bereich der ersten Scheibe ist,
und
i) wobei n₁ₐ der niedrigste Brechungsindex bei λ2 unter den Brechungsindizes der einen oder mehreren etwaigen unteren Zwischenschichten unter der zweiten funktionellen Zone, dem Index n_{H2} der zweiten funktionellen Zone und n₀ₐ ist, welcher der Brechungsindex bei λ2 im sichtbaren Bereich der zweiten Scheibe ist
j) oder im Falle des ersten Mehrband-Hologramms, wobei n₁ₐ der niedrigste Brechungsindex bei λ2 unter den Brechungsindizes der einen oder mehreren etwaigen unteren Zwischenschichten (unter der ersten funktionellen Zone), dem Index n_{H2} der ersten funktionellen Zone und n₀ₐ ist, welcher der Brechungsindex bei λ2 im sichtbaren Bereich der zweiten Scheibe ist
wobei die optische Funktion des zweiten Hologramms oder des ersten Mehrband-Hologramms so ausgewählt ist, dass ein Teil von Lichtstrahlen, die bei λ2 in die zweite Glasscheibe eingekoppelt und im Dach geführt werden, das zweite Hologramm oder das erste Mehrband-Hologramm erreicht und gebeugt und aus dem Dach auf der Seite der Fläche F4 in dem gesamten oder einem Teil des Einfallswinkelbereichs θ2 an der Fläche F4 ausgekoppelt wird, der zwischen -arcsin (1/n₀ₐ) und arcsin (1/n₀ₐ) liegt
und gegebenenfalls, wobei n_{2b} der niedrigste Brechungsindex bei λ3 im sichtbaren Bereich ist:
a') im Falle einer dritten funktionellen Zone, unter den Brechungsindizes bei λ3 der einen oder mehreren unteren Zwischenschichten über der dritten funktionellen Zone, der ersten funktionellen Zone, der einen oder mehreren oberen Zwischenschichten und bis einschließlich der ersten getönten Schicht,
b') oder im Falle eines ersten Mehrband-Hologramms, unter den Brechungsindizes der einen oder mehreren oberen Zwischenschichten zwischen der ersten holografischen Schicht, diese ausgeschlossen, und bis zur ersten getönten Schicht, diese eingeschlossen
c') oder in Abwesenheit einer getönten oberen Zwischenschicht oder einer oberen Zwischenschicht, wobei n_{2b} gleich n_{vb} ist, wobei n_{vb} der Brechungsindex bei λ3 im sichtbaren Bereich der ersten Scheibe ist,
und
wobei n_{1b} der niedrigste Brechungsindex bei λ3 unter den Brechungsindizes der einen oder mehreren etwaigen unteren Zwischenschichten unter der dritten funktionellen Zone, dem Index n_{H3} der dritten funktionellen Zone und n_{0b} ist, welcher der Brechungsindex bei λ3 im sichtbaren Bereich der zweiten Scheibe ist,
wobei die optische Funktion des dritten Hologramms oder des ersten Mehrband-Hologramms so ausgewählt ist, dass ein Teil von Lichtstrahlen, die bei λ3 in die zweite Glasscheibe eingekoppelt und im Dach geführt werden, das dritte Hologramm oder das erste Mehrband-Hologramm erreicht und gebeugt und aus dem Dach auf der Seite der Fläche F4 in dem gesamten oder einem Teil des Einfallswinkelbereichs θ2 an der Fläche F4 ausgekoppelt wird, der zwischen -arcsin (1/n_{0b}) und arcsin (1/n_{0b}) liegt,
wobei für eine gegebene Betrachtungsrichtung im Bereich θ2:
- das erste bei λ1 beugende Hologramm eine maximale Beugungseffizienz in einem ersten Unterbereich von θ1a mit einer Breite von mindestens 1° aufweist
- das zweite Hologramm oder das erste bei λ2 beugende Mehrband-Hologramm eine maximale Beugungseffizienz in einem zweiten Unterbereich von θ1b mit einer Breite von mindestens 1° mit teilweiser Überlappung mit oder getrennt von θ1a aufweist
- das etwaige dritte Hologramm oder das erste bei λ3 beugende Mehrband-Hologramm eine maximale Beugungseffizienz in einem dritten Unterbereich von θ1c mit einer Breite von mindestens 1° mit teilweiser Überlappung mit oder getrennt vom ersten und zweiten Unterbereich θ1a und θ2a aufweist.

14. Glasdach nach einem der vorstehenden Ansprüche,
**dadurch gekennzeichnet, dass** es umfasst:
- eine erste obere Zwischenschicht (31, 33), als Zwischenlage bezeichnet, aus vernetztem Klebstoffmaterial mit einem Brechungsindex gleich n₂, vorzugsweise von höchstens 1,45 bei λ1
- eine erste untere Zwischenschicht (32), als Zwischenlage bezeichnet, mit einem Brechungsindex von mindestens 1,48 bei λ1, insbesondere PVB oder EVA
- eine zweite Mineralglasscheibe.

15. Glasdach nach einem der vorstehenden Ansprüche,
**dadurch gekennzeichnet, dass** die erste holografische Schicht (60) ein Photopolymer ist, die erste funktionelle Zone (60) eine Indexmodulation dn um einen Brechungsindex n_{H0} bei einer Einschreibwellenlänge im sichtbaren Bereich λ0 aufweist, die vorzugsweise im Spektralband einer monochromatischen oder polychromatischen Lichtquelle liegt, die optisch mit der zweiten Scheibe gekoppelt ist.

## Claims

1. A laminated vehicle sunroof (100, 200, 300, 400, 500, 600, 700, 800, 900, 1000, 1100) comprising:
- a first sheet (1) of transparent mineral glass, known as the outer sheet, having a first main face (11), known as face F1, and a second opposite main face (12), known as face F2, with a refractive index nᵥ at a first wavelength λ1 in the visible range preferably greater than or equal to 1.5
- a second, inner, glass sheet (2) of transparent organic or mineral glass, with a refractive index n₀ at λ1, having a main face (13) known as face F3 and an opposite main face (14) known as face F4,
- between face F2 and face F3, a dielectric lamination interlayer of polymer material, comprising at least one lamination interlayer,
the sunroof comprising, between face F2 and F3, in this order moving away from F2:
- preferably one or more transparent, dielectric upper intermediate layers (31, 33) with given refractive indices in the visible range,
the first sheet (1) being tinted and/or from the upper intermediate layer(s) (31, 33) a first layer being tinted,
when several upper intermediate layers are tinted, the first tinted layer is the tinted layer closest to face F3,
- a first transparent dielectric holographic layer (6) comprising a first functional zone (60) with a first thick hologram, diffracting at λ1, the first functional zone having a refractive index n_{H1} at λ1
- preferably, between the first functional zone and face F3, one or more lower transparent, dielectric intermediate layers (32),
n₂ being the lowest refractive index at λ1 in the visible range:
a) from the refractive indices of the upper intermediate layer(s) (31, 33), notably interlayer(s), between the first holographic layer (6) excluded and up to and including the first tinted layer
b) or in the absence of a tinted upper intermediate layer or in the absence of an upper intermediate layer n₂ being equal to nᵥ
n₁ being the lowest refractive index at λ1 from the refractive indices of any lower intermediate layer(s), of the first functional zone and n₀, with n₂<n₁
the roof being adapted to receive a light beam in the second glass sheet, light rays injected at λ1 into the second glass sheet, with a range θ1 of angles of incidence in the second glass sheet, being guided in the roof until reaching the first hologram and with θ1 such that arcsin (n₂/n₀) ≤θ1 ≤arcsin (n₁/n₀)
the optical function of said first hologram being selected such that a portion of the rays guided in the roof reach the first hologram and are diffracted and extracted from the roof on the side of face F4, the diffracted rays being defined by a range of angles of incidence θ2 on face F4 and lying between - arcsin (1/n₀) and arcsin (1/n₀).

2. The sunroof (100, 200, 300, 400, 500, 600, 700, 800, 900, 1000, 1100) according to the preceding claim, **characterized in that** the first hologram is reflective.

3. The sunroof (100, 200, 300, 400, 500, 600, 700, 800, 900, 1000, 1100) according to one of the preceding claims, **characterized in that** the first holographic layer is a coating, preferably on face F3, or the first holographic layer is a film.

4. The sunroof (100, 200, 300, 400, 500, 600, 700, 800, 900, 1000, 1100) according to one of the preceding claims, **characterized in that** at least one lower intermediate layer (32) is an adhesive layer in contact with the first holographic layer and/or at least one upper intermediate layer (31, 33) is an adhesive layer in contact with the first holographic layer.

5. The sunroof (100, 200, 300, 400, 500, 600, 700, 800, 900, 1000, 1100) according to one of the preceding claims, **characterized in that**:
- n₀ is between 1.5 and 1.62 at λ1,
- n₂ is less than or equal to 1.48 at λ1 or even to 1.45 and preferably at least 1.3,
- nᵥ is between 1.5 and 1.55 at λ1.

6. The sunroof (100, 200, 300, 400, 500, 600, 700, 800, 900, 1000, 1100) according to one of the preceding claims, **characterized in that** n₂ is less than or equal to 1.45 with nᵥ greater than n₂.

7. The sunroof (100, 200, 300, 400, 500, 600, 700, 800, 900, 1000, 1100) according to one of the preceding claims, **characterized in that** n₁ is greater than or equal to 1.48 and n₁ is greater than n₀, n₁ is less than or equal to n_{H1}.

8. The sunroof (100, 200, 300, 400, 500, 600, 700, 800, 900, 1000, 1100) according to any one of the preceding claims **characterized in that** the first hologram is a preferably sinusoidal diffraction grating.

9. The sunroof (100, 200, 300, 400, 500, 600, 700, 800, 900, 1000, 1100) according to any one of the preceding claims **characterized in that** the first hologram is a set of off-axis Fresnel zones, notably obtained from a microlens array.

10. The sunroof (100, 200, 300, 400, 500, 600, 700, 800, 900, 1000, 1100) according to any one of the preceding claims **characterized in that** it comprises a light source optically coupled to the second sheet, in particular a monochromatic light source at said first wavelength λ1 and a full width at half maximum of preferably at most 30 nm, λ1 is preferably selected in a first range LB1 from 450 nm up to 510 nm excluded or in a second range LB2 from 510 nm up to 560 nm excluded, or in a third range LB3 from 560 to 650 nm, or better from 620 nm to 650 nm.

11. The sunroof (100, 200, 300, 400, 500, 600, 700, 800, 900, 1000, 1100) according to the preceding claim, **characterized in that** an upper intermediate layer (31, 33) is an interlayer with an index nᵢ equal to 1.48 in the visible range, and **in that** λ1 is equal to in the first range LB2 or LB1, preferably LB2.

12. The sunroof (100, 200, 300, 400, 500, 600, 700, 800, 900, 1000, 1100) according to any one of claims 1 to 9, **characterized in that** it comprises a polychromatic light source, optically coupled to the second sheet, in particular the polychromatic light source emitting:
- at said first wavelength λ1 selected from within a first range which is in a first range LB1 from 450 nm up to 510 nm excluded or in a second range LB2 from 510 nm up to 560 nm excluded, or in a third range LB3 from 560 nm to 650 nm, or better still from 620 nm to 650 nm,
- at a second main wavelength λ2 distinct from λ1 selected in a second range distinct from the first range and which is in the first, second or third ranges LB1, LB2, LB3,
- and preferably at a third main wavelength λ3 distinct from λ1 and λ2 and selected in a third range distinct from the first range and the second range which is in the first, second or third ranges LB1, LB2, LB3
- preferably the first range is in LB2, the second range is in LB1, the third range is in LB3.

13. The sunroof (100, 200, 300, 400, 500, 600, 700, 800, 900, 1000, 1100) according to the preceding claim, **characterized in that** the first so-called multi-band hologram also diffracts at the second wavelength λ2, the first functional zone having a refractive index n_{H2} at λ2 or even also diffracts at the third wavelength λ3, the first functional zone having a refractive index n_{H3} at λ3 or **in that** the roof comprises a second hologram diffracting at λ2 between the first hologram and face F3, with a second holographic layer having a second functional zone having a refractive index n_{H2} at λ2 and optionally the roof comprises a third hologram diffracting at λ3, between the second hologram and face F3, with a third holographic layer with a third functional zone having a refractive index n_{H3} at λ3,
n₂ₐ being the lowest refractive index at λ2 in the visible range:
a) in the case of a second functional zone, from the refractive indices at λ2 of the lower intermediate layer(s) above the second functional zone, the first functional zone, the upper intermediate layer(s) and up to and including the first tinted layer,
b) or in the case of a first multi-band hologram, from the refractive indices of the upper intermediate layer(s) between the first excluded holographic layer and up to and including the first tinted layer
c) or in the absence of a tinted upper intermediate layer or upper intermediate layer, n₂ₐ being equal to nva, where nva is the refractive index at λ2 in the visible range of the first sheet
and
i) n₁ₐ being the lowest refractive index at λ2 from the refractive indices of the any lower intermediate layer(s) below the second functional zone, the index n_{H2} of the second functional zone, and n₀ₐ which is the refractive index at λ2 in the visible range of the second sheet
j) or in the case of a first multi-band hologram, n₁ₐ being the lowest refractive index at λ2 of the refractive indices of any lower intermediate layer(s) (below the first functional zone), the index n_{H2} of the first functional zone, and n₀ₐ which is the refractive index at λ2 in the visible range of the second sheet
the optical function of said second hologram or of said first multi-band hologram being selected such that a portion of light rays injected at λ2 into the second glass sheet, guided in the roof, reaches the second hologram or the first multi-band hologram and is diffracted and extracted from the roof on the side of face F4 in all or part of the range of angles of incidence θ2 on face F4, and comprised between -arcsin (1/n₀ₐ) and arcsin (1/n₀ₐ)
and optionally, n_{2b} being the lowest refractive index at λ3 in the visible range:
a') in the case of a third functional zone, from the refractive indices at λ3 of the lower intermediate layer(s) above the third functional zone, the first functional zone, the upper intermediate layer(s) and up to and including the first tinted layer,
b') or in the case of a first multi-band hologram, from the refractive indices of the upper intermediate layer(s) between the first holographic layer excluded and up to and including the first tinted layer
c') or in the absence of a tinted upper intermediate layer or upper intermediate layer, n_{2b} being equal to n_{vb} where n_{vb} is the refractive index at λ3 in the visible range of the first sheet
and
n_{1b} being the lowest refractive index at λ3 from the refractive indices of the any lower intermediate layer(s) below the third functional zone, the index n_{H3} of the third functional zone, and n_{0b} which is the refractive index at λ3 in the visible range of the second sheet
the optical function of said third hologram or of said first multi-band hologram being selected such that a portion of light rays injected at λ3 into the second glass sheet, guided in the roof, reaches the third hologram or the first multi-band hologram and is diffracted and extracted from the roof on the side of face F4 in all or part of the range of angles of incidence θ2 on face F4, and comprised between -arcsin (1/n_{0b}) and arcsin (1/n_{0b})
for a given direction of observation in range θ2:
- the first hologram diffracting at λ1 having a maximum diffraction efficiency in a first sub-range of θ1a with a width of at least 1°
- the second hologram or the first multi-band hologram diffracting at λ2 having a maximum diffraction efficiency in a second sub-range of θ1b with a width of at least 1° with partial or disjoint overlap of θ1a
- the optional third hologram or the first multi-band hologram, diffracting at λ3, having a maximum diffraction efficiency in a third sub-range of θ1c with a width of at least 1° with partial or disjoint overlap with first and second sub-ranges θ1a and θ2a.

14. The sunroof according to any one of the preceding claims **characterized in that** it comprises:
- a first upper intermediate layer (31, 33), the interlayer, of crosslinked adhesive material, with a refractive index equal to n₂ preferably at most 1.45 at λ1
- a first lower intermediate layer (32), the interlayer, with a refractive index of at least 1.48 at λ1, notably PVB or EVA
- a second mineral glass sheet.

15. The sunroof according to any one of the preceding claims **characterized in that** the first holographic layer (60) is a photopolymer, the first functional zone (60) has an index modulation dn about a refractive index n_{H0} at an inscription wavelength in the visible range λ0 which is preferentially in the spectral band of a monochromatic or polychromatic light source optically coupled to the second sheet
